# EUROPEAN PATENT APPLICATION

(11) **EP 1 510 910 A1**
(43) Date of publication of application: **02.03.2005**
(21) Application number: 03733277.2
(22) Date of filing: 03.06.2003
(51) Int. Cl.: G06F 3/02, G06F 1/16

(54) **FOLDABLE KEYBOARD**

(30) Priority: 04.06.2002 JP 2002163358; 04.06.2002 JP 2002163375; 04.06.2002 JP 2002163391; 04.06.2002 JP 2002163399; 04.06.2002 JP 2002163446; 13.06.2002 JP 2002173021
(71) Applicant: BROTHER KOGYO KABUSHIKI KAISHA, Nagoya-shi, Aichi-ken 467-8561 (JP)
(72) Inventor: MOCHIZUKI, Isao,, Gifu-ken 503-0534 (JP); TAKAGI, Takeyuki,, Nagoya-shi, Aichi-ken 465-0025 (JP)
(74) Representative: Smith, Samuel Leonard
(86) International application number: PCT/JP2003/007029
(87) International publication number: WO 2003/104962

(57) **Abstract**

A control part 62 is provided independently from a keyboard 1 and is connected to a first keyboard unit 3 through a jointed-arm 67. The control part 62 can be placed in substantially the back center of the keyboard 1 through the use of a free turning property of the jointed-arm 67. A PDA 73 connected to a connector member 64 of the control part 62 can be placed in a position where a keyboard user can view the most easily, with the result that the operationality of the keyboard 1 can be enhanced.

## Description

### TECHNICAL FIELD

The present invention relates to a foldable keyboard having good portability and excellent operationality during operation and, more particularly, to a foldable keyboard in which a control part for controlling the keyboard has a connector part to be connected to another electronic device and is connected to the keyboard through a jointed-arm, so that the control part can be placed in substantially the back center of the keyboard through the use of a free turning property of the jointed-arm.

The present invention also relates to a foldable keyboard in which a control part for controlling the keyboard is connected to the keyboard through a jointed-arm, so that a placement relation between the control part and the keyboard can freely be changed.

Further, the present invention relates to a foldable keyboard which makes it possible to effectively utilize a space generated in two keyboard units due to a difference in length, thereby achieving a low-profile and downsized keyboard.

The present invention relates to a foldable keyboard having a smaller total thickness of two keyboard units in a folded state and a smaller size of the entire keyboard.

Further, the present invention relates to a foldable keyboard capable of freely changing a placement relation between a control part and the keyboard and capable of bringing an operating plane of the keyboard into parallel relation with a plane of a location where the keyboard is placed even where the control part and the keyboard are different in thickness.

The present invention relates to a foldable keyboard in which a control part for controlling the keyboard is constructed to be detachable/attachable with respect to the keyboard, so that the keyboard can be used for various electronic devices by simple replacement of the control part, reducing an excess expense burden on a keyboard user and a keyboard manufacturer.

### BACKGROUND ART

(1) Heretofore, there have been proposed various types of foldable keyboards including two separate keyboard units rotatably connected with each other. When the keyboard is not used, the keyboard units are superposed one on top of the other into a folded compact state, thus making it easy to carry anywhere. In use, on the other hand, the keyboard units are opened from the folded state to provide high operationality equivalent to standard keyboards.

For example, Japanese patent No. 3,201,456 (Japanese unexamined patent publication No. Hei 9-34612) and Japanese patent No. 3,254,658 (Japanese unexamined patent publication No. Hei 9-34611) each disclose a foldable keyboard including an enclosure and a keyboard, both being divided into two at respective longitudinal centers, which are rotatably engaged with each other through a joint arm, thereby making the keyboard freely foldable.

Moreover, Japanese unexamined patent publication No. 2000-56904 discloses a foldable keyboard in which two separate keyboards, at least one of which is slidably supported on a support plate, are connected to both sides of a back plate so that the separate keyboards are rotatable through the support plate.

In each keyboard mentioned above, the two separate keyboard units are rotatably connected with each other so that they are superposed in a compact state during nonuse to enhance portability of the keyboard and they are rotated outwards to be unfolded, allowing operation with high operationality equal to standard keyboards.

In Japanese unexamined patent publication No. 2000-56904, however, there is no disclosure or suggestion about how the control part for controlling the keyboard is placed.

Further, in the foldable keyboards disclosed in Japanese patent No. 3,201,456 and Japanese patent No. 3,254,658, a circuit unit which controls each of the two keyboards is mounted on one of the keyboards.

In the case where the circuit unit for controlling each keyboard is mounted inside the keyboard, the placement relation between the keyboard and the circuit unit remains unchanged and therefore there is inherently no concept of free changes of their placement relation.

Meanwhile, the above foldable keyboards are primarily used in connected relation to a portable electronic device such as a PDA having been in the limelight recently. Considering actual conditions that each keyboard mentioned above contains the circuit unit at a constant fixed position and a connector part to be connected to the portable electronic device is often disposed near the circuit unit, the portable electronic device is always disposed and connected in a fixed position with respect to the keyboard.

Under such circumstances, the portable electronic device could not be placed in a position desired by a keyboard user, relative to the keyboard, and the operationality of the keyboard may be deteriorated depending on the position of the portable electronic device.

The present invention has been made to solve the above problems and has a purpose to provide a foldable keyboard in which a control part for controlling the keyboard has a connector part to be connected to another electronic device and which is connected to the keyboard through a jointed-arm, so that the control part can be placed in substantially the back center of the keyboard through the use of a free turning property of the jointed-arm.

The present invention also has a purpose to provide a foldable keyboard in which a control part for controlling the keyboard is connected to the keyboard through a jointed-arm, so that a placement relation between the control part and the keyboard can freely be changed.

Further, the present invention has a purpose to provide a foldable keyboard capable of freely changing a placement relation between a control part and the keyboard and capable of bringing an operating plane of the keyboard into parallel relation with a plane of a location where the keyboard is placed even where the control part and the keyboard are different in thickness.

(2) In the case where the circuit unit for controlling each keyboard is mounted inside the keyboard, the thickness of the keyboard becomes larger inevitably in correspondence with the thickness of the circuit unit. Thus, the reduction in thickness of the keyboard could not be achieved.

At this time, the circuit unit may be mounted on one of two separate keyboards. However, even where the keyboard on which the circuit unit is not mounted may be configured to have a smaller thickness, the keyboard with no circuit unit similarly has to be configured to have an equal thickness to that of the keyboard mounting thereon the circuit unit in consideration of the balance of thickness between the keyboards. In this regard, it is also difficult to construct a low-profile keyboard.

The present invention has been made to solve the above problems and has a purpose to provide a foldable keyboard in which, based on attention to a difference in length between a keyboard unit to be operated by a left hand and another keyboard unit to be operated by a right hand, a control part is arranged alongside a side edge of the left-hand keyboard unit having a shorter length than the right-hand keyboard unit to effectively use a space generated due to the difference in length between the keyboard units and achieve a low-profile and downsized keyboard.

Further, the present invention relates to a foldable keyboard having a smaller total thickness of two keyboard units in a folded state and a smaller size of the entire keyboard.

(3) In the case where the circuit unit for controlling each keyboard is mounted inside the keyboard, the separable keyboards and the circuit unit are in an inseparable relation. If a keyboard is used in connected relation to a portable electronic device such as a PDA, the aforementioned keyboard could only be used for one type of portable electronic devices because the separable keyboards and the circuit unit are inseparable. Thus, a keyboard user has to buy a new keyboard for every portable electronic device to be used, resulting in an undesirable excess burden on the user.

A keyboard manufacturer has to manufacture individual keyboards corresponding to various types of portable electronic devices. This would increase investment costs and management expenses needed for manufacturing of many types of keyboards.

The present invention has been made to solve the above problems and has a purpose to provide a foldable keyboard provided with a control part for controlling the keyboard and constructed to be detachable/attachable with respect to the keyboard, so that the keyboard can be used for various electronic devices by simple replacement of the control part, reducing an excess expense burden on a keyboard user and a keyboard manufacturer.

### DISCLOSURE OF INVENTION

(1) To achieve the above purpose, the foldable keyboard according to the first invention is characterized in a foldable keyboard in which a rotational connecting part is provided between a first keyboard unit in which a plurality of key switches to be operated for a left hand are arranged and a second keyboard unit in which a plurality of key switches to be operated for a right hand are arranged so that both units are rotated about the rotational connecting part in a direction to come apart from each other into a horizontally arranged state during use of the keyboard and both units are rotated about the rotational connecting part in a direction to come close to each other into a superposed state during non use of the keyboard, the keyboard comprising: a control part for controlling the keyboard, the control part being provided independently from the keyboard units and including a connector part to be connected to another electronic device; and a jointed-arm which electrically connects the keyboard units to the control part and is moveably connected to the first keyboard unit; wherein the jointed-arm is connected to the first keyboard unit so that a center portion of the control part is placed at a position substantially corresponding to the rotational connecting part during use of the keyboard.

The foldable keyboard according to the first invention is characterized in that the jointed-arm is pivotally supported at one end by an arm supporting part in the first keyboard unit and the arm pivotally supports the control part at the other end.

In the foldable keyboard according to the first invention having the above structure, the first base plate in the first keyboard unit and the second base plate in the second keyboard unit are rotatably connected by the support shaft of the rotational connecting part. During use of the keyboard, accordingly, both units are rotated to come apart from each other into a horizontal state. During nonuse of the keyboard, both units are rotated about the support shaft to come close to each other into a superposed state.

Further, the keyboard units and the control part independent of the keyboard are electrically connected to each other through the jointed-arm freely movably attached to the first keyboard unit. The jointed-arm is attached to the first keyboard unit so that the center of the control part is positioned in a place substantially corresponding to the rotational connecting part during use of the keyboard. Thus, the control part can be disposed in substantially the back center of the keyboard during use. Accordingly, the electronic device connected to the connector part of the control part can be placed in a position where a keyboard user can easily view, with the result that the operationality of the keyboard can be enhanced.

The jointed-arm is pivotally connected at one end to the arm supporting part in the first keyboard unit, while connected at the other end to the control part to rotatably support it. Simple turning of the control part with respect to the keyboard units by means of the jointed-arm makes it possible to dispose the control part in substantially the back center of the keyboard units. Accordingly, during use of the keyboard with the first and second keyboard units in a horizontal state, the control part has only to be turned. With such very simple operation, the control part can be disposed rapidly in substantially the back center of the keyboard.

(2) To achieve the above purpose, the foldable keyboard according to the second invention is characterized in a foldable keyboard in which a rotational connecting part is provided between a first keyboard unit in which a plurality of key switches to be operated for a left hand are arranged and a second keyboard unit in which a plurality of key switches to be operated for a right hand are arranged so that both units are rotated about the rotational connecting part in a direction to come apart from each other into a horizontally arranged state during use of he keyboard and both units are rotated about the rotational connecting part in a direction to come close to each other into a superposed state during nonuse of the keyboard, the keyboard comprising: a control part for controlling the keyboard, the control part being detachably placed alongside a side edge of the first keyboard unit; a first connecting part provided in the control part; and a jointed-arm moveably attached to the first keyboard unit, the jointed-arm being provided with a second connecting part connected to the first connecting part to control the keyboard through the control part.

The foldable keyboard according to the second invention is characterized in that the jointed-arm is constructed that one end of a first arm member is pivotally connected to the arm connecting part in the first keyboard unit with a first connecting pin and the other end of the first arm member is pivotally connected to one end of a second arm member provided with the second connecting part with a second connecting pin, and either or both of the first and second connecting pins are provided at a predetermined slant angle with respect to a perpendicular line so that a bottom surface of the control part becomes flush with a bottom surface of the keyboard when the control part is placed close to a back side of the keyboard.

The foldable keyboard according to the second invention is characterized in that the control part is provided with a connector part to be connected to an electronic device and a backrest member for holding the electronic device close to the connector part.

The foldable keyboard according to the second invention is characterized in that the backrest member is made of a wire member rotatably supported on the control part, and the wire member is put in a clearance existing between adjacent key switch rows in the first and second keyboard units in a superposed state during nonuse of the keyboard.

The foldable keyboard according to the second invention is characterized in that the first connecting pin is formed at a back side edge of the first keyboard unit so that during nonuse the jointed-arm is put along the back side edge and the control part is placed alongside the side edge of the first keyboard unit.

In the foldable keyboard according to the second invention having the above structure, the first base plate in the first keyboard unit and the second base plate in the second keyboard unit are rotatably connected by the support shaft of the rotational connecting part. During use of the keyboard, accordingly, both units are rotated to come apart from each other into a horizontal state. During nonuse of the keyboard, both units are rotated about the support shaft to come close to each other into a superposed state.

The second connecting part of the jointed-arm movably attached to the first keyboard unit is connected to the first connecting part of the control part, so that the placement relation between the control part and the keyboard can be changed freely within a range allowed by the jointed-arm. Accordingly, the placement of the electronic device connected to the connector part of the control part can be changed freely to a desired position for a user to enhance the operationality.

Further, the first connecting pin which pivotally connects the arm connecting part in the first keyboard unit and one end of the first arm member and the second connecting pin which pivotally connects the other end of the first arm member and one end of the second arm member are either or both constructed at a predetermined slant angle with respect to a perpendicular line, so that the bottom surface of the control part is placed flush with the bottom surface of the keyboard when the control part is disposed close to the back side of the keyboard. Accordingly, even where the thickness of the control part and the thickness of the second arm member are larger than the thickness of the keyboard, it is possible to prevent the key operating plane of the keyboard from tilting with respect to the plane where the keyboard is placed. This makes it possible to prevent a deterioration of key operationality.

Moreover, the backrest member for holding an electronic device is provided close to the connector part in the control part. The backrest member makes it possible to support the electronic device directly connected to the connector part without needing cables or the like.

The backrest member is made of wire members which are put in the clearances existing between adjacent key switch rows in the first and second keyboard units in a superposed state during nonuse of the keyboard. The total thickness of the folded first and second keyboard units can be made smaller. A reduction in the size of the whole keyboard can also be achieved because the backrest member need not be attached outside the keyboard.

During nonuse, the jointed-arm and the control part can be placed alongside the peripheral edge of the first keyboard, so that as compared with the case where the jointed-arm and the control part are placed under the keyboard or in other places, a reduction in the thickness and size of the keyboard can be improved.

(3) To achieve the above purpose, the foldable keyboard according to the third invention is characterized in a foldable keyboard in which a rotational connecting part is provided between a first keyboard unit and a second keyboard unit so that both units are rotated about the rotational connecting part in a direction to come apart from each other into a horizontally arranged state during use of the keyboard and both units are rotated about the rotational connecting part in a direction to come close to each other into a superposed state during nonuse of the keyboard, wherein a predetermined number of key switches to be operated by a left hand are arranged in the first keyboard unit and more key switches than the predetermined number of key switches are arranged in the second keyboard unit to be operated by a right hand, the first keyboard unit has a longitudinal length shorter than a longitudinal length of the second keyboard unit, and a control part for controlling the keyboard is placed alongside a side edge of the first keyboard unit opposite the rotational connecting part.

The foldable keyboard according to the third invention is characterized in that a total longitudinal length of the first keyboard unit with the addition of the control part is equal to a longitudinal length of the second keyboard unit.

The foldable keyboard according to the third invention is characterized in that the control part is provided with a connector part connected to an electronic device and a backrest member for holding the electronic device close to the connector part.

The foldable keyboard according to the third invention is characterized in that the backrest member is made of a wire member rotatably supported on the control part, and the wire member is put in a clearance existing between adjacent key switch rows in the first and second keyboard units in a superposed state during nonuse of the keyboard.

The foldable keyboard according to the third invention is characterized by comprising: a first connecting part provided in the control part; and a jointed-arm moveably attached to the first keyboard unit, the jointed-arm being provided with a second connecting part connected to the first connecting part to control the keyboard through the control part.

The foldable keyboard according to the third invention is characterized in that the jointed-arm is constructed that one end of a first arm member is pivotally connected to the arm connecting part in the first keyboard unit with a first connecting pin and the other end of the first arm member is pivotally connected to one end of a second arm member provided with the second connecting part with a second connecting pin, and either or both of the first and second connecting pins are provided at a predetermined slant angle with respect to a perpendicular line so that a bottom surface of the control part becomes flush with a bottom surface of the keyboard when the control part is placed close to a back side of the keyboard.

In the foldable keyboard according to the third invention having the above structure, the first base plate in the first keyboard unit and the second base plate in the second keyboard unit are rotatably connected by the support shaft of the rotational connecting part. During use of the keyboard, accordingly, both units are rotated to come apart from each other into a horizontal state. During nonuse of the keyboard, both units are rotated about the support shaft to come close to each other into a superposed state.

In the keyboard, the first keyboard unit is constructed to have a shorter length than the second keyboard unit because the number of key switches to be operated by a left hand is smaller than the number of key switches to be operated by a right hand. The control part for controlling the keyboard is placed alongside the side edge of the first keyboard unit opposite the rotational connecting part. Accordingly, it is possible to effectively utilize the space generated in the first keyboard due to a difference in length between the first and second keyboard units.

The total longitudinal length of the first keyboard unit with the addition of the control part is determined to be equal to the longitudinal length of the second keyboard unit. As compared with the case where the control part is placed under the keyboard or at the side of the keyboard, a reduction in the thickness and size of the keyboard can be achieved.

Because the backrest member for holding the electronic device is provided close to the connector part in the control part. The backrest member makes it possible to support the electronic device directly connected to the connector part without needing cables or the like.

Further, the backrest member is made of wire members which are put in the clearances existing between adjacent key switch rows in the first and second keyboard units in a superposed state during nonuse of the keyboard. The total thickness of the folded first and second keyboard units can be made smaller. A reduction in the size of the whole keyboard can be achieved because the backrest member need not be attached outside the keyboard.

The second connecting part of the jointed-arm movably attached to the first keyboard unit is connected to the first connecting part of the control part, so that the placement relation between the control part and the keyboard can be changed freely within a range allowed by the jointed-arm. Accordingly, the placement of the electronic device connected to the connector part of the control part can be changed freely to a desired position for a user to enhance the operationality.

Further, the first connecting pin which pivotally connects the arm connecting part in the first keyboard unit and one end of the first arm member and the second connecting pin which pivotally connects the other end of the first arm member and one end of the second arm member are either or both constructed at a predetermined slant angle with respect to a perpendicular line, so that the bottom surface of the control part is placed flush with the bottom surface of the keyboard when the control part is disposed close to the back side of the keyboard. Accordingly, even where the thickness of the control part and the thickness of the second arm member are larger than the thickness of the keyboard, it is possible to prevent the key operating plane of the keyboard from tilting with respect to the plane where the keyboard is placed. This makes it possible to prevent a deterioration of key operationality.

(4) To achieve the above purpose, the foldable keyboard according to the fourth invention is characterized in a foldable keyboard in which a rotational connecting part is provided between a first keyboard unit in which a plurality of key switches to be operated for a left hand are arranged and a second keyboard unit in which a plurality of key switches to be operated for a right hand are arranged so that both units are rotated about the rotational connecting part in a direction to come apart from each other into a horizontally arranged state during use of the keyboard and both units are rotated about the rotational connecting part in a direction to come close to each other into a superposed state during nonuse of the keyboard, the keyboard comprising: a control part for controlling the keyboard, the control part being placed alongside a side edge of the first keyboard unit opposite the rotational connecting part; and a backrest member which is rotatably supported on the control part to hold an electronic device and is made of a wire member; wherein the wire member is put in a clearance existing between adjacent key switch rows in the first and second keyboard units facing each other in a superposed state during nonuse of the keyboard.

The foldable keyboard according to the fourth invention is characterized in by further comprising a first connecting part provided in the control part; and a jointed-arm moveably attached to the first keyboard unit, the jointed-arm being provided with a second connecting part connected to the first connecting part to control the keyboard through the control part.

The foldable keyboard according to the fourth invention is characterized in that the jointed-arm is constructed that one end of a first arm member is pivotally connected to the arm connecting part in the first keyboard unit with a first connecting pin and the other end of the first arm member is pivotally connected to one end of a second arm member provided with the second connecting part with a second connecting pin, and either or both of the first and second connecting pins are provided at a predetermined slant angle with respect to a perpendicular line so that a bottom surface of the control part becomes flush with a bottom surface of the keyboard when the control part is placed close to a back side of the keyboard.

The foldable keyboard according to the fourth invention is characterized in that the first keyboard unit has a longitudinal length shorter than a longitudinal length of the second keyboard unit, and in a state where the control part is placed alongside a side edge of the first keyboard unit, a total length of the first keyboard unit with the addition of the control part is equal to a longitudinal length of the second keyboard unit.

In the foldable keyboard according to the fourth invention having the above structure, the first base plate in the first keyboard unit and the second base plate in the second keyboard unit are rotatably connected by the support shaft of the rotational connecting part. During use of the keyboard, accordingly, both units are rotated to come apart from each other into a horizontal state. During nonuse of the keyboard, both units are rotated about the support shaft to come close to each other into a superposed state.

The backrest member which holds the electronic device and is made of wire members is rotatably supported on the control part. The wire members are put in the clearances existing between the adjacent key switch rows in the first and second keyboard units in the superposed state during nonuse of the keyboard. Accordingly, the total thickness of the folded first and second keyboard units can be made smaller. A reduction in the size of the whole keyboard can also be achieved because the backrest member need not be attached outside the keyboard.

Further, the first connecting pin which pivotally connects the arm connecting part in the first keyboard unit and one end of the first arm member and the second connecting pin which pivotally connects the other end of the first arm member and one end of the second arm member are either or both constructed at a predetermined slant angle with respect to a perpendicular line, so that the bottom surface of the control part is placed flush with the bottom surface of the keyboard when the control part is disposed close to the back side of the keyboard. Accordingly, even where the thickness of the control part and the thickness of the second arm member are larger than the thickness of the keyboard, it is possible to prevent the key operating plane of the keyboard from tilting with respect to the plane where the keyboard is placed. This makes it possible to prevent a deterioration of key operationality.

In the keyboard, the first keyboard unit is constructed to have a shorter length than the second keyboard unit because the number of key switches to be operated by a left hand is smaller than the number of key switches to be operated by a right hand. The control part for controlling the keyboard is placed alongside the side edge of the first keyboard unit opposite the rotational connecting part. Accordingly, it is possible to effectively utilize the space generated in the first keyboard due to a difference in length between the first and second keyboard units. As compared with the case where the control part is placed under the keyboard or at the side of the keyboard, a reduction in the thickness and size of the keyboard can be achieved.

(5) To achieve the above purpose, the foldable keyboard according to the fifth invention is characterized in a foldable keyboard in which a rotational connecting part is provided between a first keyboard unit in which a plurality of key switches to be operated for a left hand are arranged and a second keyboard unit in which a plurality of key switches to be operated for a right hand are arranged so that both units are rotated about the rotational connecting part in a direction to come apart from each other into a horizontally arranged state during use of the keyboard and both units are rotated about the rotational connecting part in a direction to come close to each other into a superposed state during nonuse of the keyboard, the keyboard comprising: a control part for controlling the keyboard, the control part being detachably placed alongside a side edge of the first keyboard unit opposite the rotational connecting part; a first connecting part provided in the control part; and a jointed-arm moveably attached to the first keyboard unit, the jointed-arm being provided with a second connecting part connected to the first connecting part to control the keyboard through the control part; wherein the jointed-arm is constructed that one end of a first arm member is pivotally connected to the arm connecting part in the first keyboard unit with a first connecting pin and the other end of the first arm member is pivotally connected to one end of a second arm member provided with the second connecting part with a second connecting pin, and either or both of the first and second connecting pins are provided at a predetermined slant angle with respect to a perpendicular line so that a bottom surface of the control part becomes flush with a bottom surface of the keyboard when the control part is placed close to a back side of the keyboard.

The foldable keyboard according to the fifth invention is characterized in that the control part is provided with a connector part to be connected to an electronic device and a backrest member for holding the electronic device close to the connector part.

The foldable keyboard according to the fifth invention is characterized in that the backrest member is made of a wire member rotatably supported on the control part, and the wire member is put in a clearance existing between adjacent key switch rows in the first and second keyboard units facing each other in a superposed state during nonuse of the keyboard.

The foldable keyboard according to the fifth invention is characterized in that the first keyboard unit has a longitudinal length shorter than a longitudinal length of the second keyboard unit, and in a state where the control part is placed alongside a side edge of the first keyboard unit, a total length of the first keyboard unit with the addition of the control part is equal to a longitudinal length of the second keyboard unit.

The foldable keyboard according to the fifth invention is characterized in that the first connecting pin is formed at a back side edge of the first keyboard unit so that during nonuse the jointed-arm is put along the back side edge and the control part is placed alongside the side edge of the first keyboard unit.

In the foldable keyboard according to the fifth invention having the above structure, the first base plate in the first keyboard unit and the second base plate in the second keyboard unit are rotatably connected by the support shaft of the rotational connecting part. During use of the keyboard, accordingly, both units are rotated to come apart from each other into a horizontal state. During nonuse of the keyboard, both units are rotated about the support shaft to come close to each other into a superposed state.

The second connecting part of the jointed-arm movably attached to the first keyboard unit is connected to the first connecting part of the control part, so that the placement relation between the control part and the keyboard can be changed freely within a range allowed by the jointed-arm. Accordingly, the placement of the electronic device connected to the connector part of the control part can be changed freely to a desired position for a user to enhance the operationality.

Further, the first connecting pin which pivotally connects the arm connecting part in the first keyboard unit and one end of the first arm member and the second connecting pin which pivotally connects the other end of the first arm member and one end of the second arm member are either or both constructed at a predetermined slant angle with respect to a perpendicular line, so that the bottom surface of the control part is placed flush with the bottom surface of the keyboard when the control part is disposed close to the back side of the keyboard. Accordingly, even where the thickness of the control part and the thickness of the second arm member are larger than the thickness of the keyboard, it is possible to prevent the key operating plane of the keyboard from tilting relative to the plane where the keyboard is placed. This makes it possible to prevent a deterioration of key operationality.

Moreover, the backrest member for holding an electronic device is provided close to the connector part in the control part. The backrest member makes it possible to support the electronic device directly connected to the connector part without needing cables or the like.

The backrest member is made of wire members which are put in the clearances existing between adjacent key switch rows in the first and second keyboard units in a superposed state during nonuse of the keyboard. The total thickness of the folded first and second keyboard units can be made smaller. A reduction in the size of the whole keyboard can also be achieved because the backrest member need not be attached outside the keyboard.

The first keyboard unit is constructed to have a shorter length than the second keyboard unit because the number of key switches to be operated by a left hand is smaller than the number of key switches to be operated by a right hand. The total longitudinal length of the first keyboard unit with the addition of the control part placed in contact with the side edge of the first keyboard unit is determined to be equal to the longitudinal length of the second keyboard unit. Accordingly, it is possible to effectively utilize the space generated in the first keyboard due to a difference in length between the first and second keyboard units. As compared with the case where the control part is placed under the keyboard or at the side of the keyboard, a reduction in the thickness and size of the keyboard can be improved.

During nonuse, the jointed-arm and the control part can be placed alongside the peripheral edge of the first keyboard, so that as compared with the case where the jointed-arm and the control part are placed under the keyboard or in other places, the appearance can be improved and a reduction in the thickness and size of the keyboard can be improved.

(6) To achieve the above purpose, the foldable keyboard according to the sixth invention is characterized in a foldable keyboard in which a rotational connecting part is provided between a first keyboard unit and a second keyboard unit so that both units are rotated about the rotational connecting part in a direction to come apart from each other into a horizontally arranged state during use of the keyboard and both units are rotated about the rotational connecting part in a direction to come close to each other into a superposed state during nonuse of the keyboard, wherein a plurality of key switches to be operated by a left hand are arranged in the first keyboard unit and a plurality of key switches to be operated by a right hand are arranged in the second keyboard, a control part for controlling the keyboard is detachably placed alongside a side edge of the first keyboard unit.

The foldable keyboard according to the sixth invention is characterized in that the control part is provided with a connector part to be connected to an electronic device and a backrest member for holding the electronic device close to the connector part.

The foldable keyboard according to the sixth invention is characterized in that the backrest member is made of a wire member rotatably supported on the control part, and the wire member is put in a clearance existing between adjacent key switch rows in the first and second keyboard units facing each other in a superposed state during nonuse of the keyboard.

The foldable keyboard according to the sixth invention is characterized by further comprising: a first connecting part provided in the control part; and a jointed-arm moveably attached to the first keyboard unit, the jointed-arm being provided with a second connecting part connected to the first connecting part to control the keyboard through the control part.

The foldable keyboard according to the sixth invention is characterized in that the jointed-arm is constructed that one end of a first arm member is pivotally connected to the arm connecting part in the first keyboard unit with a first connecting pin and the other end of the first arm member is pivotally connected to one end of a second arm member provided with the second connecting part with a second connecting pin, and either or both of the first and second connecting pins are provided at a predetermined slant angle with respect to a perpendicular line so that a bottom surface of the control part becomes flush with a bottom surface of the keyboard when the control part is placed close to a back side of the keyboard.

The foldable keyboard according to the sixth invention is characterized in that the first keyboard unit has a longitudinal length shorter than a longitudinal length of the second keyboard unit, and in a state where the control part is placed alongside a side edge of the first keyboard unit, a total longitudinal length of the first keyboard unit with the addition of the control part is equal to a longitudinal length of the second keyboard unit.

In the foldable keyboard according to the sixth invention having the above structure, the first base plate in the first keyboard unit and the second base plate in the second keyboard unit are rotatably connected by the support shaft of the rotational connecting part. During use of the keyboard, accordingly, both units are rotated to come apart from each other into a horizontal state. During nonuse of the keyboard, both units are rotated about the support shaft to come close to each other into a superposed state.

The control part for controlling the keyboard is constructed to be detachable/attachable with respect to the side edge of the first keyboard unit. If only the control part appropriate for each electronic device is replaced to another control part corresponding to various electronic devices, the same keyboard can be used to input data to each of the electronic devices. This can avoid waste in buying a new keyboard corresponding to an electronic device to be used, thus reducing an expense burden on a user. A manufacturer of the keyboard does not have to manufacture individual keyboards corresponding to various electronic devices. It is therefore possible to reduce investment costs and management expenses needed for manufacturing of many types of keyboards, reducing a burden on the keyboard manufacturer.

Moreover, the backrest member for holding an electronic device is provided close to the connector part in the control part. The backrest member makes it possible to support the electronic device directly connected to the connector part without needing cables or the like.

The backrest member is made of wire members which are put in the clearances existing between adjacent key switch rows in the first and second keyboard units in a superposed state during nonuse of the keyboard. The total thickness of the folded first and second keyboard units can be made smaller. A reduction in the size of the whole keyboard can also be achieved because the backrest member need not be attached outside the keyboard.

The second connecting part of the jointed-arm movably attached to the first keyboard unit is connected to the first connecting part of the control part, so that the placement relation between the control part and the keyboard can be changed freely within a range allowed by the jointed-arm. Accordingly, the placement of the electronic device connected to the connector part of the control part can be changed freely to a desired position for a user to enhance the operationality.

Further, the first connecting pin which pivotally connects the arm connecting part in the first keyboard unit and one end of the first arm member and the second connecting pin which pivotally connects the other end of the first arm member and one end of the second arm member are either or both constructed at a predetermined slant angle with respect to a perpendicular line, so that the bottom surface of the control part is placed flush with the bottom surface of the keyboard when the control part is disposed close to the back side of the keyboard. Accordingly, even where the thickness of the control part and the thickness of the second arm member are larger than the thickness of the keyboard, it is possible to prevent the key operating plane of the keyboard from tilting with respect to the plane where the keyboard is placed. This makes it possible to prevent a deterioration of key operationality.

The first keyboard unit is constructed to have a shorter length than the second keyboard unit because the number of key switches to be operated by a left hand is smaller than the number of key switches to be operated by a right hand. The total longitudinal length of the first keyboard unit with the addition of the control part placed in contact with the side edge of the first keyboard unit is determined to be equal to the longitudinal length of the second keyboard unit. Accordingly, it is possible to effectively utilize the space generated in the first keyboard due to a difference in length between the first and second keyboard units. As compared with the case where the control part is placed under the keyboard or at the side of the keyboard, a reduction in the thickness and size of the keyboard can be achieved.

### BRIEF DESCRIPTION OF DRAWINGS

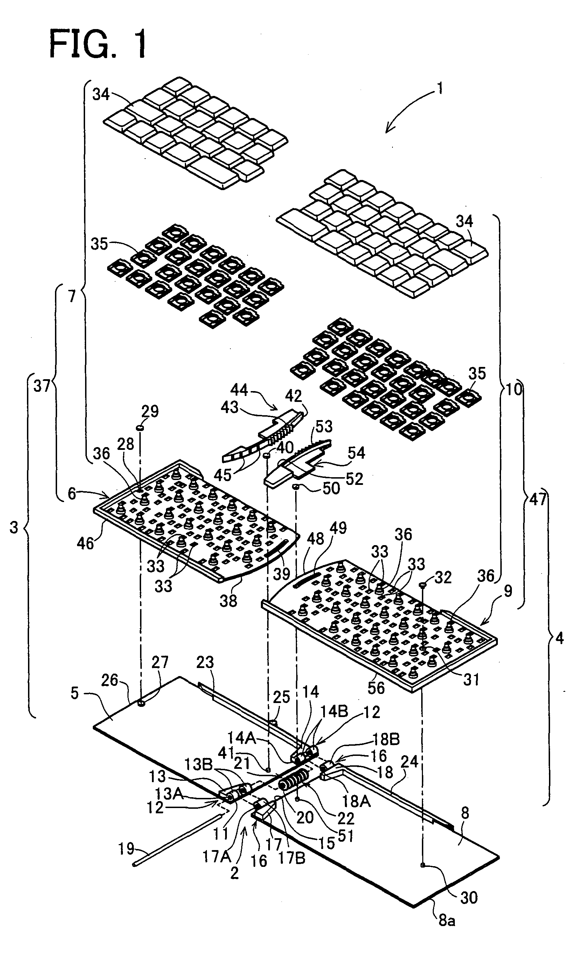

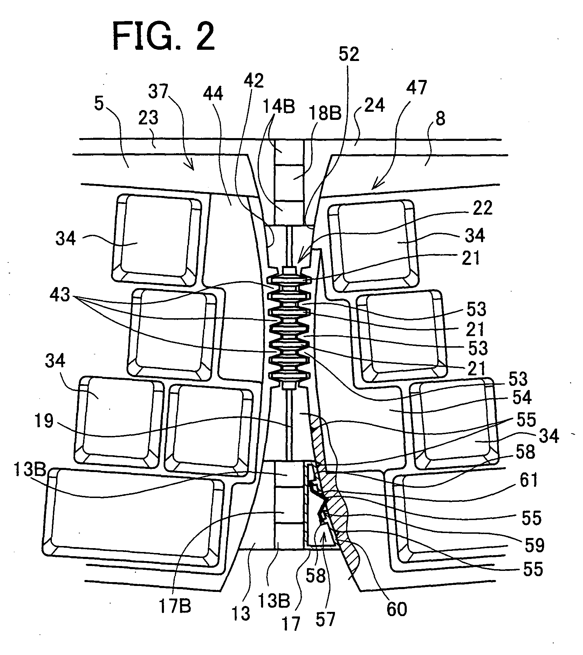

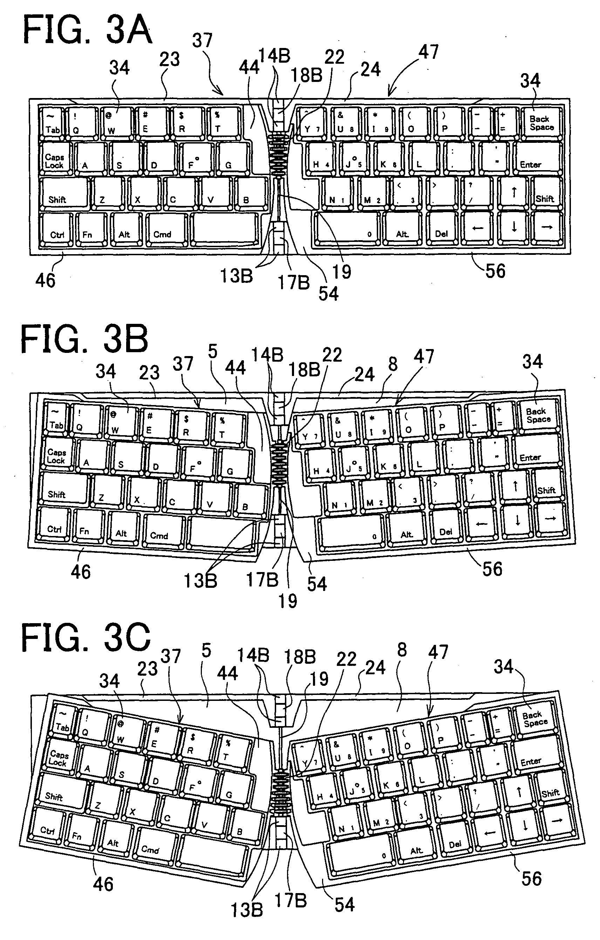

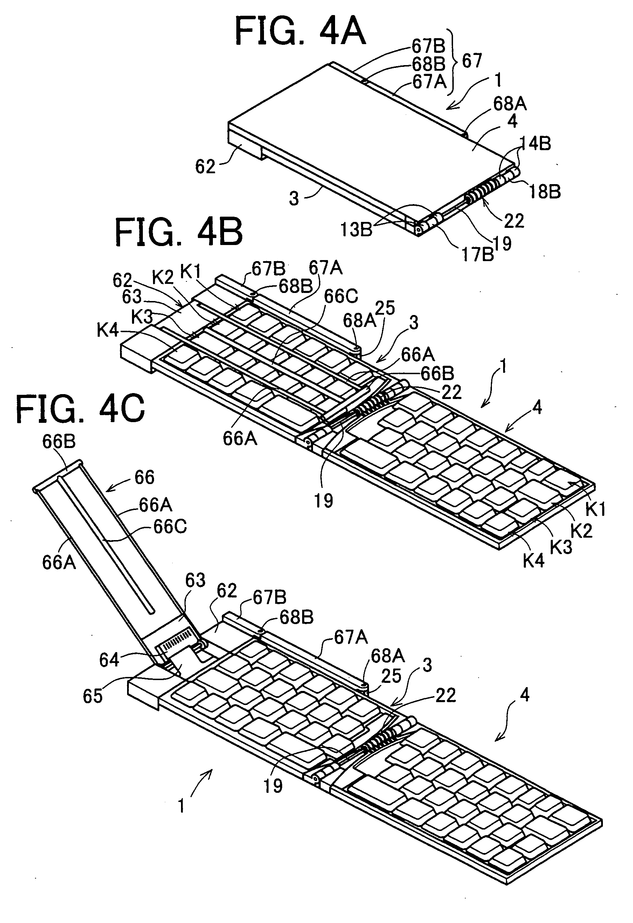

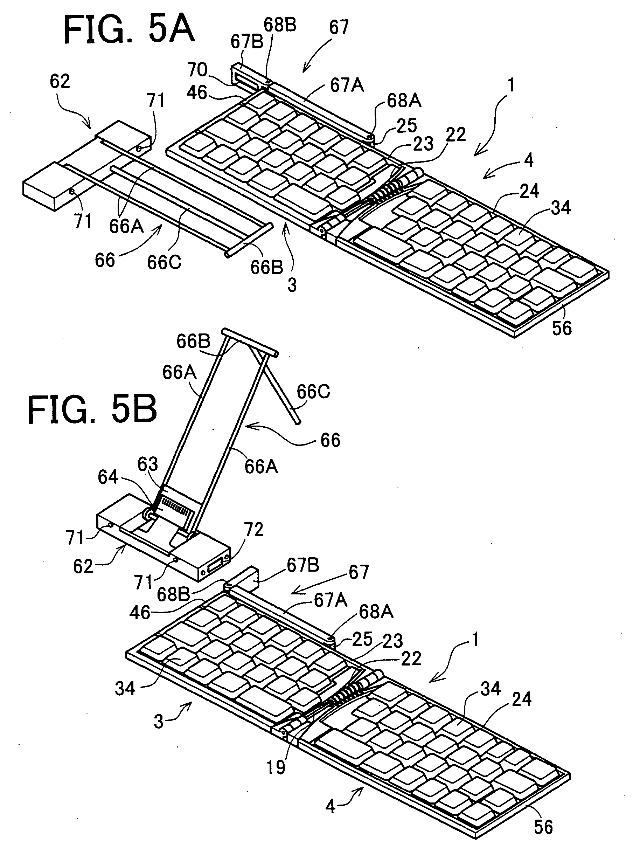

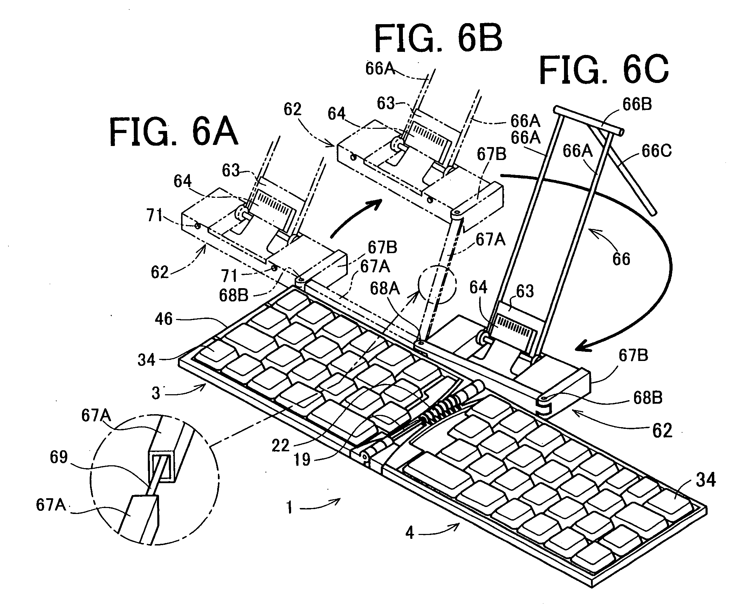

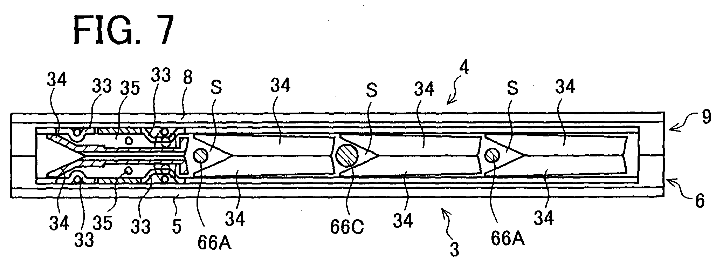

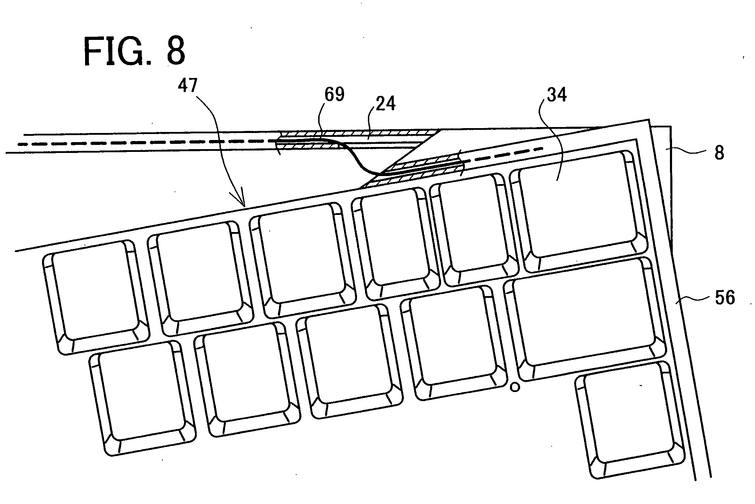

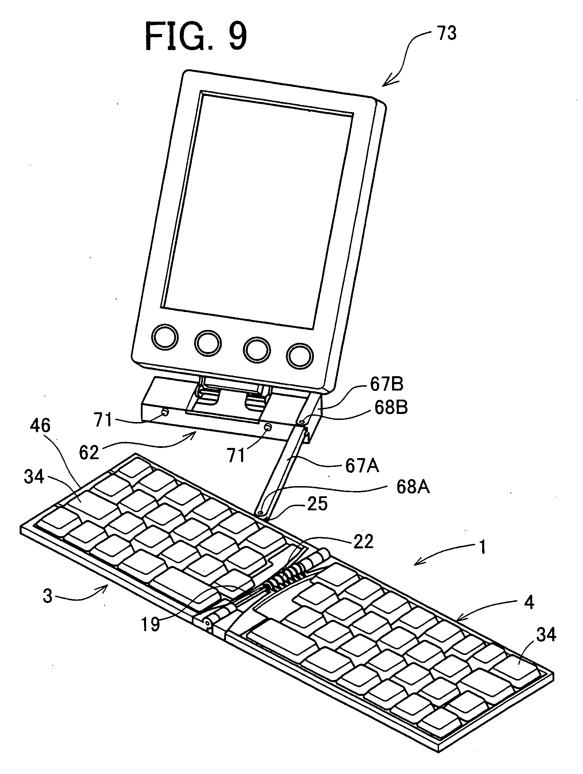

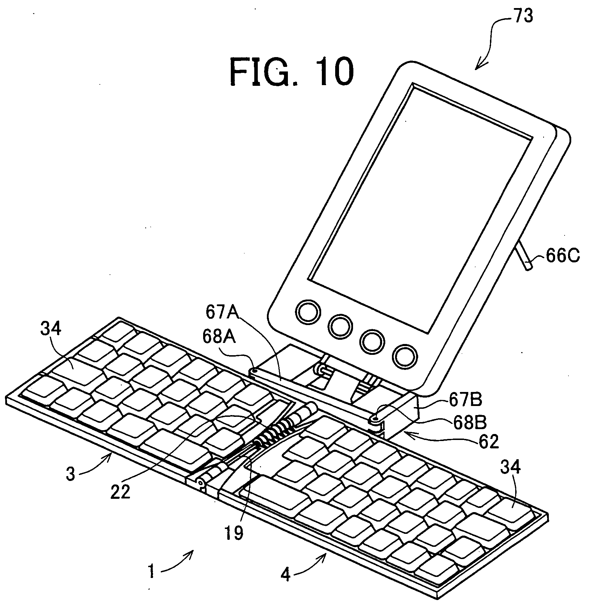

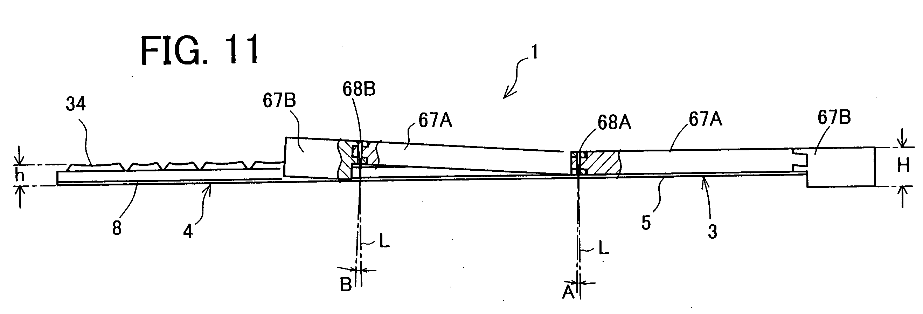

Figs. 1 through 11 are views to explain a foldable keyboard in a first embodiment; Fig. 1 is an exploded perspective view schematically showing the foldable keyboard in the first embodiment; Fig. 2 is an enlarged explanatory view showing a synchronizing system for synchronizing turning of the first and second support plates; Figs. 3 are explanatory views of the first and second support plates showing in sequence from a state where they are not turned to a state where they have been turned to the maximum turning position, Fig. 3(A) shows a non-turned state, Fig. 3(B) shows a halfway turned state, and Fig. 3(C) shows a fully turned state to the maximum turning position; Figs. 4 are explanatory view showing operations of the keyboard to be used, Fig. 4(A) is a perspective view of a first and second keyboard units in a folded state, Fig. 4(B) is a perspective view of the first and second keyboard units in an opened state, Fig. 4(C) is a perspective view of the first and second keyboard units with a backrest member being raised from a state shown in Fig. 4(B); Figs. 5 are explanatory views showing a relationship between a control part and the keyboard, Fig. 5(A) is an explanatory view showing a state where the control part is detached from the fist keyboard unit, Fig. 5(B) is an explanatory view showing a state where the control part and a jointed-arm are connected to each other; Fig. 6 is an explanatory view of various using states of the jointed-arm; Fig. 7 is an enlarged sectional view of the first and second keyboard units in the folded state shown in Fig. 4(A), showing their sections along a direction (a short side direction) perpendicular to the longitudinal direction of the first and second keyboard units; Fig. 8 is an explanatory view schematically showing a wiring state of signal wires connected to each key switch in the second keyboard unit; Fig. 9 is an explanatory view showing a state where a contact terminal of a PDA is connected to a connector member of the control part, the PDA being held in a slanting position by the backrest member and used in a state of configuration shown in Fig. 6(B); Fig. 10 is an explanatory view showing a state where a contact terminal of a PDA is connected to a connector member of the control part, the PDA being held in a slanting position by the backrest member and used in a state of configuration shown in Fig. 6(C); Fig. 11 is an explanatory view schematically showing the keyboard seen from back in the state shown in Fig. 4(B) and in the state shown in Fig. 6(C).

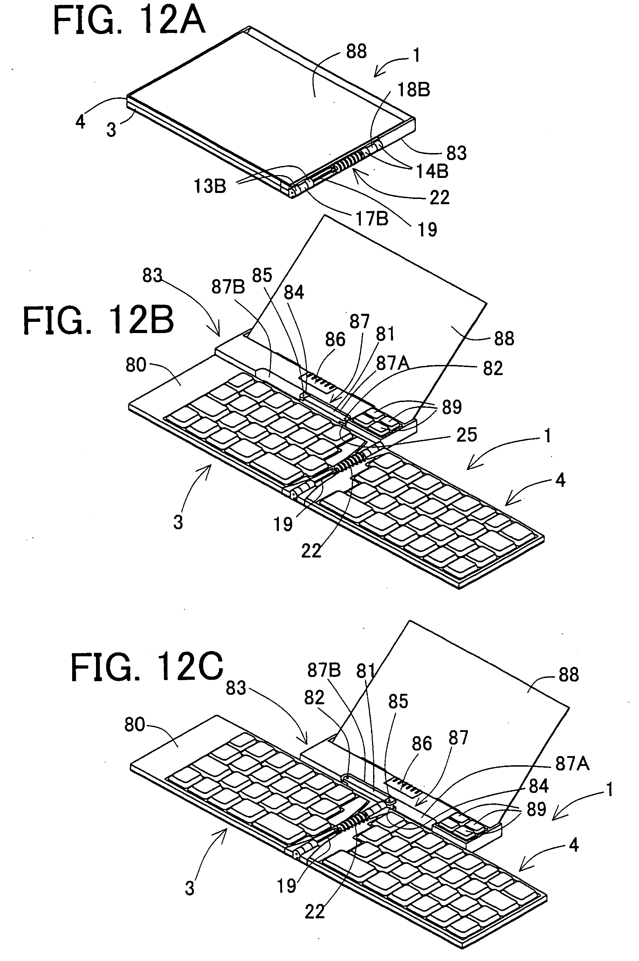

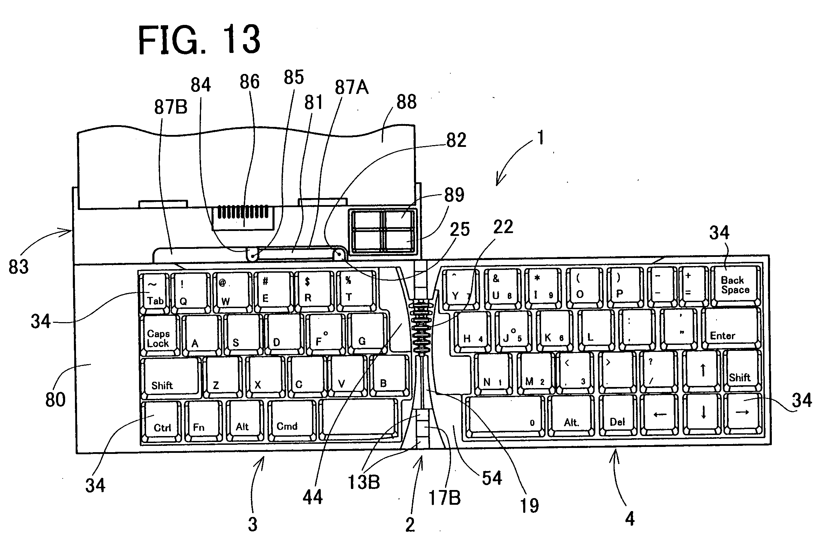

Figs. 12 through 17 are views to explain a foldable keyboard in a second embodiment; Figs. 12 are explanatory view showing operations of the keyboard to be used, Fig. 12(A) is a perspective view of a first and second keyboard units in a folded state, Fig. 12(B) is a perspective view of the first and second keyboard units in an opened state and a cover in a slanting state after rotation, Fig. 12(C) is a perspective view showing the state where the control part is disposed in substantially the back center of the keyboard from the state shown in Fig. 12(B); Fig. 13 is a plane view of the first and second keyboard units opened from the folded state into a horizontal state and the cover is in a slanting state after rotation (the state shown in Fig. 12(B));

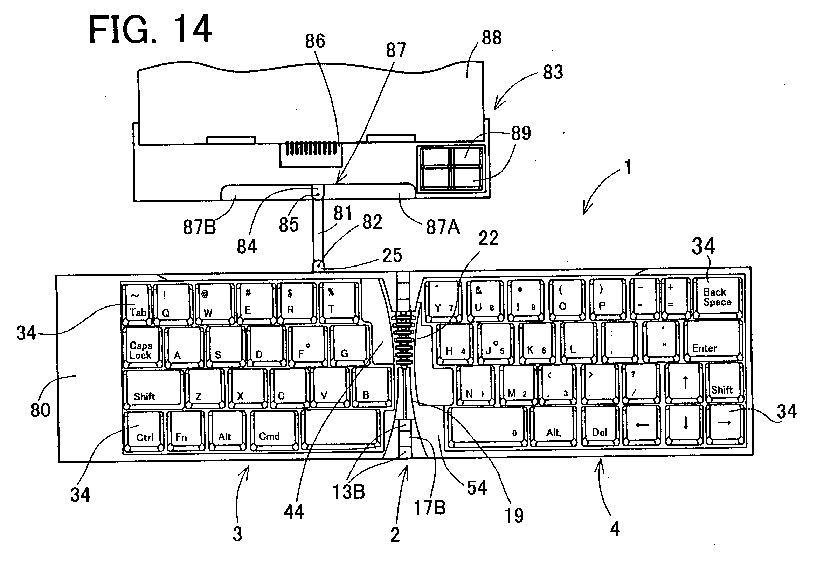

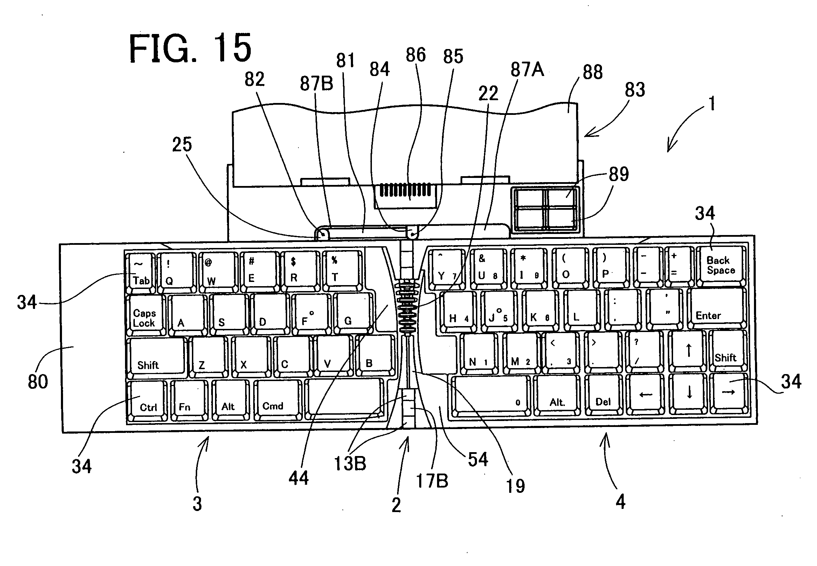

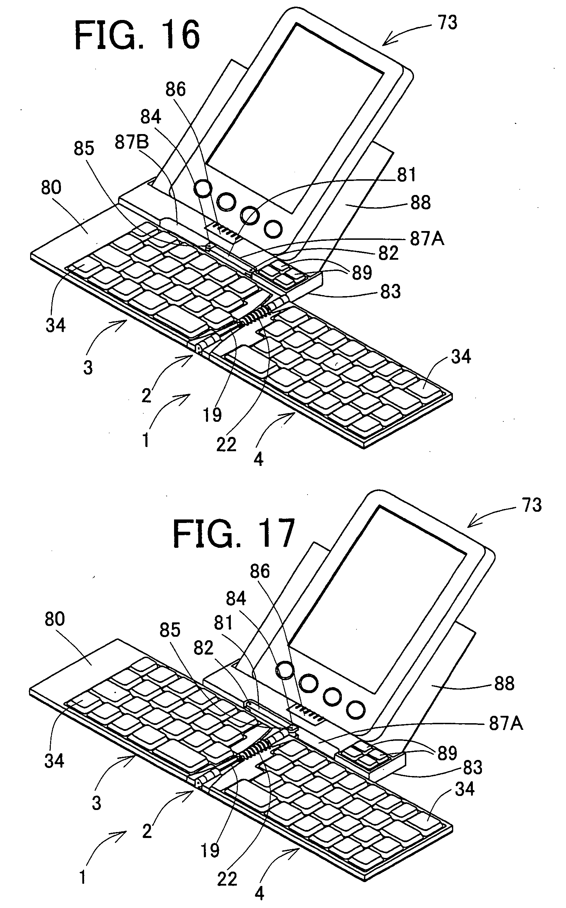

Fig. 14 is a plane view showing a halfway state where the control part has been rotated from the state shown in Fig. 13 toward the second keyboard through the jointed-arm; Fig. 15 is a plane view showing a state where the control part 83 has been disposed in substantially the back center of the keyboard 1 (the state shown in Fig. 12(C)); Fig. 16 is an explanatory view showing a state where a contact terminal of a PDA is connected to a connector member of the control part and the cover holds the PDA in a slanting state, showing the use in the state shown in Fig. 13; and Fig. 17 is an explanatory view showing a state where the contact terminal of the PDA is connected to the connector member of the control part and the cover holds the PDA in the slanting state, showing the use in the state shown in Fig. 15.

### BEST MODE FOR CARRYING OUT THE INVENTION

A preferred embodiment of a foldable keyboard embodying the present invention will be explained below with reference to attached drawings. At first, a schematic structure of the keyboard in a first embodiment is described referring to Fig. 1. Fig. 1 is an exploded perspective view schematically showing the foldable keyboard.

In Fig. 1, the keyboard 1 is basically structured of a first keyboard unit 3 and a second keyboard unit 4 which are rotatably connected with each other by a rotational connecting part 2. The first keyboard unit 3 includes a first base plate 5, a first support plate 6 mounted to be rotatable in a horizontal direction on the first base plate 5, and a plurality of key switches 7 arranged on the first support plate 6. The second keyboard unit 4 includes a second base plate 8, a second support plate 9 mounted to be rotatable in a horizontal direction on the second base plate 8, and a plurality of key switches 10 arranged on the second support plate 9.

At first, the structure of the rotational connecting part 2 is explained below. The first base plate 5 is made of a thin metal plate, e.g., aluminum plate. This first base plate 5 is provided, at two corners 12 in a side edge 11 (a right side edge in Fig. 1), with resinous bearing members 13 and 14 each constituting part of the rotational connecting part 2. The bearing member 13 is provided with two bearings 13B spaced apart, each being formed with a bearing hole 13A. The bearing member 14 is similarly provided with two bearings 14B spaced apart, each being formed with a bearing hole 14A.

As with the first base plate 5, the second base plate 8 is made of a thin metal plate, e.g., aluminum plate. This second base plate 8 is provided, at two corners 16 in a side edge 15 (a left side edge in Fig. 1), with resinous bearing members 17 and 18. The bearing member 17 is provided with a single bearing 17B formed with a bearing hole 17A. The bearing member 18 is similarly provided with a single bearing 18B formed with a bearing hole 18A.

The bearing 17B is fitted between the bearings 13B so that the bearing hole 17A of the bearing 17B is aligned with the bearing holes 13A of the bearings 13B. Further, the bearing 18B is fitted between the bearings 14B so that the bearing hole 18A of the bearing 18B is aligned with the bearing holes 14A of the bearings 14B.

In the bearing holes 13A, 17A, 14A, and 18A arranged in line as above, a support shaft 19 is inserted. Thus, the first base plate 5 and the second base plate 8 are held to be mutually rotatable by the support shaft 19. A sliding member 22, which is of a cylindrical shape and centrally formed with a sliding hole 20 and concentrically formed with gear teeth 21 on the periphery, is slidably fitted on the support shaft 19 through the sliding hole 20. This sliding member 22 is a member for causing synchronous turning of the first and second keyboard units 3 and 4. The action thereof will be mentioned later.

It is to be noted that the bearing member 14 is integrally formed with a hollow peripheral wall member 23 and the bearing member 18 is integrally formed with a hollow peripheral wall member 24. A signal wire 69 (mentioned later) for connecting each key switch 10 provided in the second keyboard unit 4 to a control part 62 (mentioned later) is laid in the inside of the peripheral wall member 24. This signal wire 69 extends through the hollow bearing member 18 and the bearing 18B to the outside and is wound around the support shaft 19, and extends through the hollow bearing member 14 to the peripheral wall member 23.

A signal wire (not shown) for connecting each key switch 7 provided in the first keyboard unit 3 to the control part 62 is laid in the inside of the peripheral wall member 23. This signal wire and the signal wire 69 extending from the second keyboard unit 4 through the peripheral wall member 24 are collected up to be laid in a jointed-arm 67 (mentioned later). An arm supporting part 25 is formed to be hollow on the back of the peripheral wall member 23 and pivotally supports the jointed-arm 67. Through the arm supporting part 25, the signal wires laid as above are set in the jointed-arm 67.

In the first base plate 5, a screw seat 27 is formed near a side edge 26 opposite the side edge 11 and in substantially the center. A screw 29, passing with play through a screw hole 28 in the first support plate 6, is screwed in the screw seat 27. Thus, on the first base plate 5, the first support plate 6 is mounted to be horizontally turnable about the screw 29 and the screw seat 27 serving as a turning axis.

In the second base plate 8, similarly, a screw seat 30 is formed slightly inwardly (corresponding to the width of the control part 62 mentioned later) from a side edge 8a opposite the side edge 15 and in substantially the center. A screw 32, passing with play through a screw hole 31 in the second support plate 9, is screwed in the screw seat 30. Accordingly, on the second base plate 8, the second support plate 9 is mounted to be horizontally turnable about the screw 32 and the screw seat 30 serving as a turning axis.

The first support plate 6 in the first keyboard unit 3 is made of a thin metal plate, e.g., aluminum plate, on which there are arranged a predetermined number of key switches 7 which are operated by the user's left hand. It is to be noted that the number of key switches 7 is determined based on the ISO International Standards (ISO 2126 and ISO 2530).

The first support plate 6 is integrally formed with four supporting parts 33 per one key switch 7 by press working or other techniques. On the first support plate 6, there is placed a membrane switch of a three-layer structure (including an upper sheet having a movable electrode, a lower sheet having a fixed electrode, and a spacer sheet placed between the upper and lower sheets and formed with a switching hole to separate the movable electrode and the fixed electrode). Each supporting part 33 is formed protruding upward through each hole formed in the membrane switch.

Each key switch 7 is mainly constructed of a key top 34, a pair of link members 35 for vertically guiding the key top 34, and a rubber spring 36 which is disposed on the membrane switch in a position corresponding to a switching part comprised of the movable electrode and the fixed electrode of the membrane switch and urges the key top 34 upward. Each upper end of the pair of link members 35 is movably connected with the key top 34 on its lower surface and each lower end of the link members 35 is movably engaged in each supporting part 33.

During non-depression, the key top 34 is urged upward by the urging force of the rubber spring 36 and held in a non-depression position. When the key top 34 is pressed down against the urging force of the rubber spring 36, the rubber spring 36 pushes the movable electrode of the membrane switch to bring the movable electrode into contact with the fixed electrode in the switching hole, thereby performing a switching operation. The above mentioned key switches 7 and the first support plate 6 constitute a first key unit 37. The structure of each key switch 7 is well known in the art and the detailed explanation thereof is omitted herein.

The first support plate 6 is formed, in one side (the right side in Fig. 1), with a circular arc face 38 coincident with the turning radius of the first support plate 6 which turns about the turning axis (i.e., the screw 29 passing with play through the screw hole 28 and the screw seat 27). The first support plate 6 is also formed with an arcuate slot 39 inwardly from the circular arc face 38. A screw 40 passes with play through this arcuate slot 39 and is screwed in a screw seat 41 formed in the first base plate 5. The slot 39 and the screw 40 serve to guide the first support plate 6 so that it is stably turned in a horizontal direction on the first base plate 5.

On the side of the first support plate 6 where the circular arc face 38 is formed, there is placed a first gear member 44 with a circular arc face 42 which is equal in curvature radius to the circular arc face 38 and is formed with gear teeth 43 engaging with gear teeth 21 of the sliding member 22. Further, the circular arc face 42 of the first gear member 44 is formed with a plurality of locking recesses 45 which constitute part of a locking mechanism 57 which will be mentioned later.

As described above, the circular arc face 38 of the first support plate 6 and the circular arc face 42 of the first gear member 44 are configured to have an equal curvature radius. Accordingly, the circular arc faces 38 and 42 coincide with each other. This makes it possible to prevent displacement between the circular arc faces 38 and 42 and improve the appearance of the first key unit 37. The first gear member 44 is set in the first support plate 6 in such a manner as covering the screw 40 and the slot 39 from above, thereby hiding the screw 40 and the slot 39 from view to further improve the appearance of the first key unit 37.

A peripheral wall member 46 is formed in the first support plate 6 except for a part thereof. When the first support plate 6 is mounted on the first base plate 5, the peripheral wall member 46 is joined to the peripheral wall member 23 provided in the first base plate 5 to constitute a peripheral wall member surrounding the periphery of the first support plate 6 except for the circular arc face 38.

The second support plate 9 in the second keyboard unit 4 is made of a thin metal plate, e.g., aluminum plate as with the first support plate 6. On this second support plate 9, there are arranged a predetermined number of key switches 10 which are operated by the user's right hand. It is to be noted that the number of key switches 10 is determined based on the ISO International Standards (ISO 2126 and ISO 2530) and to be larger than the number of key switches 7 arranged on the first support plate 6 which are operated by the user's left hand. Each key switch 10 has an identical structure to each key switch 7 and will accordingly be explained with the same reference numerals.

The second support plate 9 is integrally formed with four supporting parts 33 per one key switch 10 by press working or other techniques. On the second support plate 9, there is placed a membrane switch of a three-layer structure (including an upper sheet having a movable electrode, a lower sheet having a fixed electrode, and a spacer sheet placed between the upper and lower sheets and formed with a switching hole to separate the movable electrode and the fixed electrode). Each supporting part 33 is formed protruding upward through each hole formed in the membrane switch.

Each key switch 10 is mainly constructed of a key top 34, a pair of link members 35 for vertically guiding the key top 34, and a rubber spring 36 which is disposed on the membrane switch in a position corresponding to a switching part comprised of the movable electrode and the fixed electrode of the membrane switch and urges the key top 34 upward. Each upper end of the pair of link members 35 is movably connected with the key top 34 on its lower surface and each lower end of the link members 35 is movably engaged in each supporting part 33.

During non-depression, the key top 34 is urged upward by the urging force of the rubber spring 36 and held in a non-depression position. When the key top 34 is pressed down against the urging force of the rubber spring 36, the rubber spring 36 pushes the movable electrode of the membrane switch to bring the movable electrode into contact with the fixed electrode in the switching hole, thereby performing a switching operation. The above mentioned key switches 10 and the second support plate 9 constitute a second key unit 47.

The second support plate 9 is formed, in one side (the left side in Fig. 1), with a circular arc face 48 coincident with the turning radius of the second support plate 9 which turns about the turning axis (i.e., the screw 31 passing through the screw hole 31 with play and the screw seat 30). The second support plate 9 is also formed with an arcuate slot 49 inwardly from the circular arc face 48. A screw 50 passes with play through this arcuate slot 49 and is screwed in a screw seat 51 formed in the second base plate 8. The slot 49 and the screw 50 serve to guide the second support plate 9 so that it is stably turned in a horizontal direction on the second base plate 8.

On the side of the second support plate 9 where the circular arc face 48 is formed, there is placed a second gear member 54 with a circular arc face 52 which is equal in curvature radius to the circular arc face 48 and is formed with gear teeth 53 engaging with the gear teeth 21 of the sliding member 22. Further, the circular arc face 52 of the second gear member 54 is formed with a plurality of locking recesses 55 (see Fig. 2) which constitute part of a locking mechanism 57 which will be mentioned later.

As described above, the circular arc face 48 of the second support plate 9 and the circular arc face 52 of the second gear member 54 are configured to have an equal curvature radius. Accordingly, the circular arc faces 48 and 52 coincide with each other. This makes it possible to prevent displacement between the circular arc faces 48 and 52 and improve the appearance of the second key unit 47. The second gear member 54 is set in the second support plate 9 in such a manner as covering the screw 50 and the slot 49 from above, thereby hiding the screw 50 and the slot 49 from view to further improve the appearance of the second key unit 47.

A hollow peripheral wall member 56 is formed in the second support plate 9 except for a part thereof. When the second support plate 9 is mounted on the second base plate 8, the peripheral wall member 56 is joined to the peripheral wall member 24 provided in the second base plate 8 to constitute a peripheral wall member surrounding the periphery of the second support plate 9 except for the circular arc face 48.

Next, an explanation is made, referring to Figs. 2 and 3, on a synchronizing mechanism for causing synchronous turning of the first support plate 6 and the second support plate 9 when they are turned horizontally on the first base plate 5 and the second base plate 8 respectively and a locking mechanism for locking the first support plate 6 and the second support plate 9 in respective positions after they are turned by the synchronizing mechanism. Fig. 2 is an enlarged explanatory view showing the synchronizing mechanism for causing the synchronous turning of the first and second support plates 6 and 9. Figs. 3 are explanatory views showing states of the first and second support plates 6 and 9 in sequence from a state where they are not turned to a state where they have been turned to the maximum turning position; Fig. 3(A) shows a non-turned state, Fig. 3(B) shows a halfway turned state, and Fig. 3(C) shows a fully turned state to the maximum turning position.

In Fig. 2, the gear teeth 43 formed in the circular arc face 42 of the first gear member 44 and the gear teeth 53 formed in the circular arc face 52 of the second gear member 54 are engaged with the gear teeth 21 of the sliding member 22.

The gear teeth 21 of the sliding member 22 are concentrically formed, so that the gear teeth 21 are equal in distance between the central axis of the sliding member 22 and the peripheral edge. Further, the gear teeth 43 and the gear teeth 53 are formed in the circular arc faces 42 and 52 respectively and therefore the peripheral edges of the gear teeth 43 and the gear teeth 53 are also positioned along a circular arcuate line. Accordingly, the gear teeth 21 and each of the gear teeth 43 and 53 are engaged deeply in part and shallowly in another part, not equally in all parts, as shown in Figs. 2 and 3. Such engagement relation remains unchanged even where the sliding member 22 is slid on the support shaft 19 in association with the turning of the first support plate 6 and the second support plate 9. However, the gear teeth 21 of the sliding member 22 and each of the gear teeth 43, 53 of the first and second gear members 44, 54 are constantly engaged deeply in part, so that the engagement between the gear teeth 21 and each of the gear teeth 43 and 53 will not be released wherever the sliding member 22 is positioned on the support shaft 19.

In the state where the first and second support plates 6 and 9 are not turned, as shown in Fig. 3(A), each key switch 7 arranged on the support plate 6 and each key switch 10 arranged on the support plate 9 have the same key placement relation as that in a standard keyboard. The engagement between the gear teeth 21 of the sliding member 22 and the gear teeth 43 of the first gear member 44 and the engagement between the gear teeth 21 and the gear teeth 53 of the second gear member 54 are both shallow in the upper area in Fig. 3(A) and deep in the lower area. If the use of the keyboard 1 having the above key placement is desired, needless to say, it may be operated in this state.

It is constructed such that the distance from the engaging position of the gear teeth 43 of the first support plate 6 with the gear teeth 21 of the sliding member 22 to the screw 29 (the turning axis) is equal to the distance from the engaging position of the gear teeth 53 of the second support plate 9 with the gear teeth 21 of the sliding member 22 to the screw 32 (the turning axis). Accordingly, the support plates 6 and 9 can be smoothly turned by the action of the sliding member 22.

When the first key unit 37 or the second key unit 47 is turned clockwise or counterclockwise in Fig. 3(A) from the state shown in Fig. 3(A), the sliding member 22 is caused to slide along the support shaft 19 downward in Fig. 3(A) because of the engagement of the gear teeth 43 of the first gear member 44 and the gear teeth 53 of the second gear member 54 with the gear teeth 21 of the sliding member 22. Then, the first support plate 6 and the second support plate 9 are synchronously turned clockwise about the screw 29 and the screw seat 27 serving as the turning axis and counterclockwise about the screw 32 and the screw seat 30 serving as the turning axis, respectively. Fig. 3(B) shows the first and second support plates 6 and 9 that have been turned slightly in the above way. If the operation of the keyboard 1 having the above key placement is desired, the keyboard may be operated in this state.

When the first support plate 6 or the second support plate 9 is further turned from the state shown in Fig. 3(B), the sliding member 22 is caused to slide on the support shaft 19 more downward from the position shown in Fig. 3(B), causing synchronous turning of the first support plate 6 and the second support plate 9 in a clockwise direction and a counterclockwise direction respectively. Fig. 3(C) shows the first support plate 6 and the second support plate 9 turned to the maximum turning positions. If the operation of the keyboard 1 having the above key placement is desired, the keyboard may be operated in this state.

Consequently, when the user turns the first key unit 37 or the second key unit 47 prior to the use of the keyboard 1, the other key unit will be turned in synchronization with the turning of the former key unit. In this way, each key unit 37, 47 is adjusted to a desirable operating state by a very simple operation so that each user can operate the keyboard in individual suitable operating state.

Next, referring to Fig. 2, an explanation is given to the locking mechanism for locking the first key unit 37 and the second key unit 47 to the first base plate 5 and the second base plate 8 respectively after the units 37 and 47 are turned synchronously as above to respective desired turning positions.

The locking mechanisms 57 are provided between the first base plate 5 and the first key unit 37 and between the second base plate 8 and the second key unit 47, respectively. Each locking mechanism 57 has an identical structure and therefore the following explanation is made on only the locking mechanism 57 provided between the second base plate 8 and the second key unit 47. It is to be noted that the locking mechanism 57 provided between the first base plate 5 and the first key unit 37 is constructed of locking recesses 45 formed in the circular arc face 42 of the first gear member 44 placed on the first support plate 6 in the first key unit 37 and a resilient locking piece (not shown) formed in the bearing member 13 provided at the corner 12 of the first base plate 5.

As an alternative to providing the locking mechanism 57 in both of the first and second key units 37 and 47 as above, the locking mechanism 57 could be provided in either of them.

In the locking mechanism 57 shown in Fig. 2, the bearing member 17 provided at the corner 16 of the second base plate 8 is formed to be hollow in which a pair of holding portions 58 is provided. Between the pair of holding portions 58, a resilient locking piece 59 made of a resilient thin metal plate bent in the shape of a Japanese letter "〈" is placed with both ends held in the holding portions 58. A concave curved surface 60 of the bearing member 17 which is in contact with the circular arc face 54 of the second gear member 54 is formed with an opening 61 through which a peaked end of the resilient locking piece 59 protrudes. The peaked end of the resilient locking piece 59 protruding through the opening 61 in this way is engaged in one of a plurality of locking recesses 55 formed in the circular arc face 52 of the second gear member 54.

With the aforementioned locking mechanism 57, the first and second key units 37 and 47 can be locked when they are turned synchronously to the desired turning positions and thereat the peaked end of the resilient locking piece 59 is engaged in the locking recess 55 of the second gear member 54. Thus, the keyboard can be operated stably in the fixed state most suitable for each user.

The locking mechanism 57 is simply constructed of the locking recesses 55 formed in the circular arc face 52 of the second gear member 54 and the resilient locking piece 59 placed in the bearing member 17 of the second base plate 8. Thus the locking mechanism 57 of each of the first and second key units 37 and 47 can be achieved at lower cost. Because the locking recesses 55 are formed in the circular arc face 52 of the second gear member 54, the locking recesses 55 can be made at the same time of the formation of the gear teeth 53, thereby achieving a further reduction in cost.

Each structure provided in the keyboard 1 is explained below with reference to Figs. 4 to 11.

In the keyboard 1, as mentioned above, the predetermined number of key switches 7 which are operated by the left hand are arranged according to the ISO International Standards (ISO 2126 and ISO 2530) on the first support plate 6 in the first keyboard unit 3 and the predetermined number of key switches 10 which are operated by the right hand are arranged according to the ISO international Standards on the second support plate 9 in the second keyboard unit 4. The number of key switches 7 to be operated by the left hand is determined to be smaller than the number of key switches 10 to be operated by the right hand. Based on this, as shown in Fig. 3, the longitudinal length of the first keyboard unit 3 is determined to be shorter than the longitudinal length of the second keyboard unit 4.

When the first and second keyboard units 3 and 4 having the different lengths as above are folded, their lengths are unbalanced, deteriorating the portability of the keyboard 1. In the keyboard 1 in the present embodiment, therefore, a control part 62 for controlling the keyboard 1 is set alongside one side edge of the first keyboard unit 3 (which is an opposite edge to the side rotatably connected with the second keyboard unit 4; a left side edge in Fig. 4) as shown in Figs. 4(A) to 4(C) so that the total longitudinal length of the first keyboard unit 3 with the addition of the control part 62 be equal to the longitudinal length of the second keyboard unit 4.

With the above structure, it is possible to effectively utilize the space generated in the first keyboard unit 3 due to the difference in length between the first and second keyboard units 3 and 4. As compared with the case where the control part 62 is placed under the keyboard 1 or at the side of the keyboard 1, a reduction in the thickness and size of the keyboard 1 can be improved.

Fig. 4(A) shows the keyboard 1 in the folded state during nonuse, in which the keyboard units 3 and 4 are superposed after rotation in a direction to come close to each other about the support shaft 19 inserted in the bearing hole 13A of each bearing 13B of the bearing member 13 and the bearing hole 17A of the bearing 17B of the bearing member 17 and the bearing hole 14A of each bearing 14B of the bearing member 14 and the bearing hole 18A of the bearing 18B of the bearing member 18. It is shown that the total longitudinal length of the first keyboard unit 3 with the addition of the control part 62 is equal to the longitudinal length of the second keyboard unit 4, achieving a compact structure.

Fig. 4(B) shows the keyboard 1 in which the keyboard units 3 and 4 are held in the horizontal state during use after rotation in a direction to come apart from each other about the support shaft 19. It is shown that the total longitudinal length of the first keyboard unit 3 with the addition of the control part 62 is equal to the longitudinal length of the second keyboard unit 4, so that the right and left lengths of the keyboard 1 centering on the support shaft 19 is well balanced.

To the control part 62 in substantially its center, as shown in Fig. 4(C), a cover member 63 is attached to be opened and closed. On the underside of this cover member 63 is provided a connector member 64 which is connected to various types of portable electronic devices such as a PDA. The connector member 64 is connected to a flexible substrate 65 which is connected to a control unit (not shown) built in the control part 62 to control the keyboard 1. A pair of wire members 66A is fixed to both sides of the cover member 63 near the connector member 64. A wire member 66B rotatably spans outer ends of the wire members 66A. Furthermore, a support wire 66C is fixed to the center of the wire member 66B. Each wire member 66A is rotated together with the cover member 63 to the state shown in Fig. 4(C). The support wire 66C is then turned backward to hold the portable electronic device such as a PDA in a slanting position. Those wire members 66A, 66B, and 66C constitute a backrest member 66 for holding the portable electronic device such as a PDA in the slanting position.

As above, the connector member 64 is placed on the cover member 63 rotatably attached to the control part 62 and the backrest member 66 is provided in the cover member 63 near the connector member 64. Accordingly, the portable electronic device such as a PDA can be held in the slanting position while it is connected directly to the connector member 64 without needing cables or the like.

Referring to Fig. 4(B) and Fig. 7, an explanation is given to the structure to put the backrest member 66 constructed as above in the keyboard units 3 and 4 when these units 3 and 4 are folded as shown in Fig. 4(A). Fig. 7 is an enlarged sectional view of the keyboard units 3 and 4 in the folded state, showing their sections along a direction (the short side direction) perpendicular to the longitudinal direction of each keyboard unit 3, 4.

As shown in Fig. 4(B), in the first keyboard unit 3, there exist from above even clearances between a first key switch row K1 and a second key switch row K2, between the second key switch row K2 and a third key switch row K3, and between the third key switch row K3 and a fourth key switch row K4, respectively. This relation is similarly established in the second keyboard unit 4; specifically, between a first key switch row K1 and a second key switch row K2, between the second key switch row K2 and a third key switch row K3, and between the third key switch row K3 and a fourth key switch row K4, respectively. Accordingly, in the folded state shown in Fig. 4(A), in cooperation with the shape of each key top 34 in each key switch row, a clearance S is generated between the adjacent key switch rows in the first and second keyboard units 3 and 4 facing each other as shown in Fig. 7.

In the keyboard 1 in the first embodiment, one of the wire members 66A of the backrest member 66 is put in the clearance S generated between the first and second key switch rows K1 and K2, the support wire 66C is put in the clearance S generated between the second and third key switch rows K2 and K3, and similarly the other wire member 66A is put in the clearance S generated between the third and fourth key switch rows K3 and K4. The wire member 66B can be put well in the clearance generated between the first and second keyboard units 3 and 4 because a height difference existing between the top surface of each key top 34 and the flat surface of the first gear member 44 will be doubled when the first and second keyboard 3 and 4 are folded.

As mentioned above, it is constructed such that each wire member 66A and the support wire 66C constituting the backrest member 66 are put in the clearances S between the key switch rows facing each other in the folded keyboard units 3 and 4, while the wire member 66B is put in the clearance between the keyboard units 3 and 4. Consequently, the total thickness of the first and second keyboard units 3 and 4 in the folded state can be made smaller. Because the backrest member 66 need not be attached outside the keyboard 1, a reduction in the size of the whole keyboard 1 can be achieved.

Further, there is no need to provide a special structure for storing the backrest member 66 in the keyboard 1, so that the cost for the whole keyboard 1 can be reduced.

Next, a structure for electrically connecting each key switch 7 in the first keyboard unit 3 and each key switch 10 in the second keyboard unit 4 to the control part 62 will be explained with reference to Figs. 4, 5, and 8. Figs. 5 are explanatory views showing a relation between the control part 62 and the keyboard 1; Fig. 5(A) is an explanatory view showing a state where the control part 62 is detached from the first keyboard unit 3, and Fig. 5(B) is an explanatory view showing a state where the control part 62 is to be connected to the jointed-arm.

The jointed-arm 67 is pivotally connected to the arm supporting part 25 formed on the back of the peripheral wall member 23 of the first base plate 5 in the first keyboard unit 3. The jointed-arm 67 is constructed of a first arm member 67A which is hollow and pivotally connected at one end to the arm supporting part 25 with a first connecting pin 68A and a second arm member 67B which is hollow and pivotally connected to the other end of the first arm member 67A with a second connecting pin 68B.

The signal wire 69 connected to the membrane switch corresponding to each of the key switches 10 arranged on the second support plate 9 in the second key unit 47 is laid to extend from the hollow peripheral wall member 56 formed in the second support plate 9 to the hollow peripheral wall member 24 formed in the second base plate 8, and extend through the bearing member 18, the bearing 18B, the bearing member 14, and the peripheral wall member 23 of the base plate 5 to the arm supporting part 25. The signal wire (not shown) connected to the membrane switch corresponding to each of the key switches 7 arranged on the first support plate 6 in the first key unit 37 is laid to extend from the hollow peripheral wall member 23 directly to the arm supporting part 25.

The signal wire extending from the second key unit 47 and the signal wire extending from the first key unit 37 are collected up in the arm supporting part 25 and set in the first arm member 67A and the second arm member 67B. The thus set signal wires are connected to the connector member 70 (see Fig. 5(A)) provided on one side of the second arm member 67B.

In the control part 62, two projections 71 are formed on the side face which faces the side edge of the first keyboard unit 3. Each projection 71 is detachably fitted in a positioning hole (not shown) formed in the peripheral wall member 46 of the first support plate 6 in the first keyboard unit 3. The control part 62 is thus detachably placed at the side of the first keyboard unit 3. The control part 62 is also provided, on the end face, with the connector member 72 which is connected to the connector member 70 of the second arm member 67B.

As mentioned above, each projection 71 of the control part 62 is detachably fitted in the positioning hole in the peripheral wall member 46 in the first keyboard unit 3 and the connector member 72 of the control part 60 is allowed to connect with and disconnect from the connector member 70 of the second arm member 67B. Thus, the control part 62 is constructed to be detachable/attachable with respect to the first keyboard unit 3. If a plurality of control parts 62 are prepared in correspondence with various portable electronic devices such as a PDA, it is possible to use the same keyboard 1 by replacement of only the control part 62 to input data to the associated portable electronic device, thereby avoiding waste in buying a new keyboard 1 corresponding to a portable electronic device to be used, thus reducing an expense burden on the user. A manufacturer of the keyboard 1 does not have to manufacture individual keyboards 1 corresponding to various types of portable electronic devices. It is therefore possible to reduce investment costs and management expenses needed for manufacturing of many types of keyboards.

The action of the arm member 67 constructed as above is explained with reference to Figs. 5 and 6. Fig. 6 is an explanatory view showing various using states of the jointed-arm.

As shown in Figs. 5, of the jointed-arm 67, the first arm part 67A is pivotally connected at one end to the arm supporting part 25 formed on the back (opposite the operator) of the peripheral wall member 23 with the first connecting pin 68A. The second arm member 67B is pivotally connected to the other end of the first arm member 67A with the second connecting pin 68B. The control part 62 is constructed to be detachable/attachable with respect to the first keyboard unit 3 as mentioned above, so that the control part 62 can be positioned in various using states through the use of a free turning property of the jointed-arm 67.

For instance, as shown in Fig. 6, after each projection 71 of the control part 62 is disconnected from the positioning hole in the peripheral wall member 46, the control part 62 may be placed in parallel with the keyboard 1 in the longitudinal direction thereof. The control part 62 in this case can be used in the configuration (A) in Fig. 6. When the first arm member 67A is turned clockwise about the first connecting pin 68A from the configuration (A), the control part 62 can be used in the configuration (B) where the control part 62 is placed apart from the keyboard 1. Further, when the first arm member 67A is further turned clockwise about the connecting pin 68A from the configuration (B), the control part 62 can be used in the configuration (C) close to the back side edge (opposite the operating side) of substantially the longitudinal center of the keyboard 1.

Fig. 9 shows the case where a PDA 73 is held in the slanting position by the backrest member 66 while a contact terminal of the PDA 73 is connected to the connector member 64 of the control part 62 in the configuration (B) in Fig. 6. Similarly, Fig. 10 shows the case where the PDA 73 is held in the slanting position by the backrest member 66 while the contact terminal of the PDA 73 is connected to the connector member 64 of the control part 62 in the configuration (C) in Fig. 6.

In Fig. 10, the PDA 73 connected to the connector member 64 of the control part 62 is placed at the back of substantially the longitudinal center of the keyboard 1.

As described above, the control part 62 is constructed to be detachable/attachable with respect to the first keyboard unit 3 and be connected to the first keyboard unit 3 through the jointed-arm 67. The placement relation between the control part 62 and the keyboard 1 can be changed freely within a range allowed by the jointed-arm 67. Accordingly, the placing position of the PDA 73 with respect to the keyboard 1 can be changed freely to a desired position for the keyboard user to enhance the operationality.

In particular, by means of the jointed-arm 67, the center portion of the control part 62 is located in a position substantially corresponding to the rotational connecting part 2 during use of the keyboard 1. Thus, the control part 62 can be disposed in substantially the back center of the keyboard 1 during use. Accordingly, the PDA 73 connected to the connector member 64 of the control part 62 can be placed in a position where a keyboard user can easily view, with the result that the operationality of the keyboard 1 can be enhanced.

As disclosed above, furthermore, simple turning of the control part 62 with respect to the keyboard 1 by means of the jointed-arm 67 makes it possible to dispose the control part 62 in substantially the back center of the keyboard 1. Accordingly, before using the keyboard 1 with the first and second keyboard units 3 and 4 rotated to a horizontal state, the control part 62 has only to be turned. With such very simple operation, the control part 62 can be disposed rapidly in substantially the back center of the keyboard 1.

In relation to the jointed-arm 67 constructed as above, an explanation will be given referring to Fig. 11 about a connecting structure of the first connecting pin 68A which connects the first arm member 67A and the arm supporting part 25 and a connecting structure of the second connecting pin 68B which connects the first arm member 67A and the second arm member 67B. Fig. 11 is an explanatory view schematically showing the keyboard 1 seen from back in the state shown in Fig. 4(B) and in the configuration (C) in Fig. 6.

In Fig. 11, the thickness H of the second arm member 67B is determined to be larger than the thickness h of the keyboard 1 (the thickness between the bottom surface of each of the first and second base plates 5 and 8 and the top surface of each key top 34) because the connector member 70 need to be provided for connection to the connector member 72 of the control part 62. Accordingly, in the placement shown in Fig. 4(B) and (C) where the keyboard 1 is not used, a plane provided by the top surfaces of the key switches 7, 10 is slightly tilted, not parallel, relative to the plane of a location where the keyboard 1 is placed.

In the keyboard 1 in the first embodiment, considering such circumstances, the first connecting pin 68A and the second connecting pin 68B are provided for connection at a slant angle so that the bottom surface of the keyboard 1 (i.e., the bottom surfaces of the first and second base plates 5 and 8) be flush with the bottom surface of the second arm member 67B during actual use of the keyboard 1.

To be more specific, in Fig. 11, the first connecting pin 68A which pivotally connects the arm supporting part 25 and the first arm member 67A is provided at a slant angle A with respect to a perpendicular line L. On the other hand, the second connecting pin 68B which pivotally connects the first arm member 67A and the second arm member 67B is provided at a slant angle B with respect to the perpendicular line L. The angle B is determined to be larger than the angle A.

As above, the first connecting pin 68A is provided at the slant angle A with respect to the perpendicular line L while the second connecting pin 68B is provided at the slant angle B with respect to the perpendicular line L. When the control part 62 is placed in the configuration (C) in Fig. 6, accordingly, the second arm member 67B is positioned upward by a height corresponding to the thickness difference (H-h) based on the total slant angle (A+B). Thus, the bottom surface of the control part 62 (which is placed to be flush with the lower end surface of the second arm member 67B) can become flush with the bottom surface of the keyboard 1.

Even where the thickness H of the second arm member 67B and the thickness of the control part 62 are not equal to the thickness h of the keyboard 1, the bottom surface of the second arm member 67B or the control part 62 can become flush with the bottom surface of the keyboard 1 during use with the first connecting pin 68A and the second connecting pin 68B provided at their respective slant angles, thus bringing the plane provided by the top surfaces of the key switches 7, 10 into parallel relation with the plane of a location where the keyboard 1 is placed. This makes it possible to prevent a deterioration of key operationality.

In the above example, both the first connecting pin 68A and the second connecting pin 68B are provided in the slanting positions. In an alternative, only either of the connecting pins may be provided in the slanting position.

A second embodiment of a foldable keyboard embodying the present invention will be explained below with reference to Figs 12 through 17. The keyboard in the second embodiment is identical in structure to the keyboard in the first embodiment. The keyboard 1 in the first embodiment is structured such that the control part 62 is detachably disposed alongside the left side edge (see Fig. 4) of the first keyboard unit 3 because the longitudinal length of the first keyboard 3 is shorter than the longitudinal length of the second keyboard unit 4, so that the total longitudinal length of the first keyboard unit 3 with the addition of the control part 62 is equal to the longitudinal length of the second keyboard unit 4, and the control part 62 is connected to the jointed-arm 67 which is pivotally attached to the first keyboard unit 3 and includes the first arm member 67A and the second arm member 67B. The keyboard in the second embodiment, on the other hand, is different from that in the first embodiment about the structure that the first keyboard unit is integrally provided with a blank part at the left side so that the total longitudinal length of the keyboard unit including the blank part is equal to the longitudinal length of the second keyboard unit, and the control part is pivotally connected through the jointed-arm to the first keyboard unit on the back side.

It is to be noted that other structures of the keyboard in the second embodiment are identical to those of the keyboard in the first embodiment. Accordingly, in the following description, elements identical to those in the first embodiment are indicated by the same reference numerals as those in the first embodiment and their explanations are omitted. The following description will be made with a focus on characterizing portions in the second embodiment.

At first, a schematic structure of the keyboard in the second embodiment is explained with reference to Figs. 12. Figs. 12 are explanatory views showing operations of the keyboard to be used, Fig. 12(A) is a perspective view of a first and second keyboard units in a folded state, Fig. 12(B) is a perspective view of the first and second keyboard units in an opened state with a cover turned to a slanting position, Fig. 12(C) is a perspective view of the first and second keyboard units with a backrest member moved from a state shown in Fig. 12(B) to a position corresponding to the back center of the keyboard.

The keyboard 1 in the second embodiment includes an integrally formed blank part 80 having no key switch 7 at one side edge of the first keyboard unit 3 (which is an opposite edge to the side rotatably connected with the second keyboard unit 4; a left side edge in Fig. 12) as shown in Figs. 12 (A) through 12(C). The first keyboard unit 3 is constructed to have a longitudinal length including the blank part 80, equal to the longitudinal length of the second keyboard unit 2.

Fig. 12(A) shows the keyboard 1 in the folded state during nonuse, in which the keyboard units 3 and 4 are superposed after rotation in a direction to come close to each other about the support shaft 19 inserted in all the bearing hole 13A of each bearing 13B of the bearing member 13 and the bearing hole 17A of the bearing 17B of the bearing member 17 and the bearing hole 14A of each bearing 14B of the bearing member 14 and the bearing hole 18A of the bearing 18B of the bearing member 18. It is shown that the total longitudinal length of the first keyboard unit 3 including the blank part 80 is equal to the longitudinal length of the second keyboard unit 4, achieving a compact structure.

Fig. 12(B) shows the keyboard 1 in which the keyboard units 3 and 4 are held in the horizontal state during use after rotation in a direction to come apart from each other about the support shaft 19. It is shown that the total longitudinal length of the first keyboard unit 3 including the blank part 80 is equal to the length of the second keyboard unit 4, so that the right and left lengths of the keyboard 1 centering on the-support shaft 19 is well balanced.

Next, a structure for electrically connecting each key switch 7 in the first keyboard unit 3 and each key switch 10 in the second keyboard unit 4 to the control part 62 will be explained.

A jointed-arm 81 is pivotally connected at one end, with a connecting pin 82, to the arm supporting part 25 formed on the back of the peripheral wall member 23 of the first base plate 5 in the first keyboard unit 3. The jointed-arm 81 is pivotally connected at the other end, with a connecting pin 85, to an arm supporting part 84 formed in a control part 83 mentioned later. The jointed-arm 81 is made to be hollow in which a signal line is laid as mentioned later.

As described above, the signal wire 69 connected to the membrane switch corresponding to each of the key switches 10 arranged on the second support plate 9 in the second key unit 47 is laid to extend from the hollow peripheral wall member 56 formed in the second support plate 9 to the hollow peripheral wall member 24 formed in the second base plate 8 as shown in Fig. 8, and extend through the bearing member 18, the bearing 18B, the bearing member 14, and the peripheral wall member 23 of the first base plate 5 to the arm supporting part 25. The signal wire (not shown) connected to the membrane switch corresponding to each of the key switches 7 arranged on the first support plate 6 in the first key unit 37 is laid extending from the hollow peripheral wall member 23 directly to the arm supporting part 25.

The signal wire extending from the second key unit 47 and the signal wire extending from the first key unit 37 are collected up in the arm supporting part 25 and set in the hollow jointed-arm 81. The thus laid signal wires are connected to a connector member 86 via an arm supporting part 84 of the control part 83. The connector member 86 is connected to another portable electronic device such as a PDA.

The control part 83 is explained below. This control part 83 is provided independently from the keyboard 1 and used to control the keyboard 1. The control part 83 is provided at the front side (facing the back of the first keyboard unit 3) with an arm storage part 87 formed of a long groove. The arm supporting part 84 is substantially centrally formed in the arm storage part 87. This arm storage part 87 is partitioned into two storage parts 87A and 87B by the arm supporting part 84. The storage part 87A is used to store the jointed-arm 81 when the control part 83 is placed at the back left side of the first keyboard unit 3 as shown in Fig. 12(B). The other storage part 87B is used to store the jointed-arm 81 when the control part 83 is placed on the back center of the first keyboard unit 3 as shown in Fig. 12(C).

The control part 83 is provided, at the back of the arm supporting part 84, with the connector member 86 connected to the signal wires extending as above to the arm supporting part 84 via the jointed-arm 81. The connector member 86 is connected to another portable electronic device such as a PDA. A cover 88 is rotatably attached to the control part 83 near the back of the connector member 86. In the folded state of the first and second keyboard units 3 and 4, as shown in Fig. 12(A), the cover 88 covers the upper part of the keyboard 1 for protection. In use of the keyboard 1, as shown in Fig. 12(B) and Fig. 12(C), the cover 88 is used to hold the portable electronic device such as a PDA connected to the connector member 86 in a slanting position.

As above, because the cover 88 is rotatably attached to the control part 83 near the back of the connector member 86, the portable electronic device such as a PDA can be held in a slanting position by the cover 88 while the portable electronic device is directly connected to the connector member 86 without needing any cables.

Four key switches 89 are provided in the control part 83 in one side portion (a right side portion in Fig. 12 and other figures). Each key switch 89 is used for setting the type of the portable electronic device such as a PDA connected to the connector member 86. If each key switch 89 is allocated to a setting function for one type, accordingly, a single control part 83 may be used for four types of portable electronic devices. The key switches 89 may be used in combination for setting the type of portable electronic device, so that the control part 83 can support more types of portable electronic devices.

With the above structure, the same keyboard 1 and the same control part 83 can be used to input data to various portable electronic devices. This can avoid waste in buying a new keyboard corresponding to a portable electronic device to be used, thus reducing an expense burden on a user. A manufacturer of the keyboard 1 does not have to manufacture individual keyboards 1 corresponding to various types of portable electronic devices. It is therefore possible to reduce investment costs and management expenses needed for manufacturing of many types of keyboards, reducing a burden on the keyboard manufacturer.

The operation of the jointed-arm 81 constructed as above will be explained with reference to Figs. 12 to 15. Fig. 13 is a plane view of the first and second keyboard units 3 and 4 opened from the folded state into a horizontal state and the cover 88 rotated to the slanting state (shown in Fig. 12(B)). Fig. 14 is a plane view of the control part 83 in a halfway state turned toward the second keyboard unit 4. Fig. 15 is a plane view of the control part 83 moved from the state shown in Fig. 14 to the back center of keyboard 1 (the state shown in Fig. 12(C)).

As shown in Fig. 12 and other figures, one end of the jointed-arm 81 is pivotally connected to the arm supporting part 25 formed on the back of the peripheral wall member 23 (opposite the operator) with the connecting pin 82. The other end of the jointed-arm 81 is pivotally connected to the arm supporting part 84 of the control part 83 with the connecting pin 85. The control part 83 being independently provided from the keyboard 1 as mentioned above can be used in various using patterns through the use of a free turning property of the jointed-arm 81.

For example, the cover 88 is rotated upward from the state shown in Fig. 12(A) to the slanting state, and then the first and second keyboard units 3 and 4 are opened into the horizontal state corresponding to the state shown in Fig. 13. In this state, the keyboard 1 may be used. Moreover, when the control part 83 is turned from the state shown in Fig. 13 toward the second keyboard unit 4 by means of the jointed-arm 81, the control part 83 comes to the state shown in Fig. 14. In this state, the keyboard 1 may also be used. When the control part 83 is further turned to the back center of the keyboard 1 by means of the jointed-arm 81, the control part 83 comes to the state shown in Fig. 15. In this state, the keyboard 1 may be used.

Fig. 16 shows a state where a contact terminal of a PDA 73 is connected to the connector member 86 of the control part 83, the PDA 73 being held in a slanting position by the cover 88 and used in a state of configuration shown in Fig. 13. Similarly, Fig. 17 shows a state where a contact terminal of the PDA 73 is connected to the connector member 86 of the control part 83, the PDA 73 being held in a slanting position by the cover 88 and used in a state of configuration shown in Fig. 15.

In Fig. 17, the control part 83 is located in a position where the center of the control part 83 substantially corresponds to the rotational connecting part 2. Accordingly, the PDA 73 connected to the connector member 86 of the control part 83 is placed at the back of substantially the longitudinal center of the keyboard 1. In the state shown in Fig. 17, as above, the PDA 73 connected to the connector member 86 of the control part 83 is placed in a position where the keyboard user can view the most easily, with the result that the operationality of the keyboard can be enhanced.

The jointed-arm 81 is pivotally connected at one end to the arm supporting part 25 of the first keyboard unit 3 and at the other end to the arm supporting part 84 of the control part 83. Simple turning of the control part 83 with respect to the keyboard 1 by means of the jointed-arm 81 makes it possible to dispose the control part 83 in substantially the back center of the keyboard 1. Accordingly, before using the keyboard 1 with the first and second keyboard units 3 and 4 being rotated to the horizontal state, the control part 83 has only to be turned. With such very simple operation, the control part 83 can be disposed rapidly in substantially the back center of the keyboard 1.

The present invention is not limited to the above preferred embodiments and may be modified or changed variously within a scope of the present invention.

### INDUSTRIAL APPLICABILITY

It is possible to provide a foldable keyboard in which a control part for controlling the keyboard has a connector part to be connected to another electronic device and is connected to the keyboard through a jointed-arm, so that the control part can be placed in substantially the back center of the keyboard through the use of a free turning property of the jointed-arm.

It is further possible to provide a foldable keyboard in which a placement relation between the control part and the keyboard can be changed freely.

Based on attention to a difference in length between a keyboard unit to be used by a left hand and a keyboard unit to be operated by a right hand, the control part is placed alongside the side edge of the keyboard for the left hand having a shorter length than the keyboard for the right hand. It is therefore possible to provide a foldable keyboard capable of effectively using a space generated due to the difference in length between the keyboard units and achieving a low-profile and downsized keyboard.

It is possible to a foldable keyboard having a smaller total thickness of two keyboard units in a folded state and a smaller size of the entire keyboard.

Furthermore, it is possible to provide a foldable keyboard capable of freely changing a placement relation between a control part and the keyboard and capable of bringing an operating plane of the keyboard into parallel relation with a plane of a location where the keyboard is placed even where the control part and the keyboard are different in thickness.

It is also possible to provide a foldable keyboard in which a control part for controlling the keyboard is constructed to be detachable/attachable with respect to the keyboard, so that the keyboard can be used for various electronic devices by simple replacement of the control part, reducing an excess expense burden on a keyboard user and a keyboard manufacturer.

## Claims

1. A foldable keyboard in which a rotational connecting part is provided between a first keyboard unit in which a plurality of key switches to be operated for a left hand are arranged and a second keyboard unit in which a plurality of key switches to be operated for a right hand are arranged so that both units are rotated about the rotational connecting part in a direction to come apart from each other into a horizontally arranged state during use of the keyboard and both units are rotated about the rotational connecting part in a direction to come close to each other into a superposed state during non use of the keyboard, the keyboard comprising:
a control part for controlling the keyboard, the control part being provided independently from the keyboard units and including a connector part to be connected to another electronic device; and
a jointed-arm which electrically connects the keyboard units to the control part and is moveably connected to the first keyboard unit;
wherein the jointed-arm is connected to the first keyboard unit so that a center portion of the control part is placed at a position substantially corresponding to the rotational connecting part during use of the keyboard.

2. The foldable keyboard according to claim 1, wherein the jointed-arm is pivotally supported at one end by an arm supporting part in the first keyboard unit and the arm pivotally supports the control part at the other end.

3. A foldable keyboard in which a rotational connecting part is provided between a first keyboard unit in which a plurality of key switches to be operated for a left hand are arranged and a second keyboard unit in which a plurality of key switches to be operated for a right hand are arranged so that both units are rotated about the rotational connecting part in a direction to come apart from each other into a horizontally arranged state during use of he keyboard and both units are rotated about the rotational connecting part in a direction to come close to each other into a superposed state during nonuse of the keyboard, the keyboard comprising:
a control part for controlling the keyboard, the control part being detachably placed alongside a side edge of the first keyboard unit;
a first connecting part provided in the control part; and
a jointed-arm moveably attached to the first keyboard unit, the jointed-arm being provided with a second connecting part connected to the first connecting part to control the keyboard through the control part.

4. The foldable keyboard according to claim 3, wherein the jointed-arm is constructed that one end of a first arm member is pivotally connected to the arm connecting part in the first keyboard unit with a first connecting pin and the other end of the first arm member is pivotally connected to one end of a second arm member provided with the second connecting part with a second connecting pin, and
either or both of the first and second connecting pins are provided at a predetermined slant angle with respect to a perpendicular line so that a bottom surface of the control part becomes flush with a bottom surface of the keyboard when the control part is placed close to a back side of the keyboard.

5. The foldable keyboard according to claim 3, wherein the control part is provided with a connector part to be connected to an electronic device and a backrest member for holding the electronic device close to the connector part.

6. The foldable keyboard according to claim 5, wherein the backrest member is made of a wire member rotatably supported on the control part, and
the wire member is put in a clearance existing between adjacent key switch rows in the first and second keyboard units in a superposed state during nonuse of the keyboard.

7. The foldable keyboard according to claim 4, wherein the first connecting pin is formed at a back side edge of the first keyboard unit so that during nonuse the jointed-arm is put along the back side edge and the control part is placed alongside the side edge of the first keyboard unit.

8. A foldable keyboard in which a rotational connecting part is provided between a first keyboard unit and a second keyboard unit so that both units are rotated about the rotational connecting part in a direction to come apart from each other into a horizontally arranged state during use of the keyboard and both units are rotated about the rotational connecting part in a direction to come close to each other into a superposed state during nonuse of the keyboard,
wherein a predetermined number of key switches to be operated by a left hand are arranged in the first keyboard unit and more key switches than the predetermined number of key switches are arranged in the second keyboard unit to be operated by a right hand,
the first keyboard unit has a longitudinal length shorter than a longitudinal length of the second keyboard unit, and
a control part for controlling the keyboard is placed alongside a side edge of the first keyboard unit opposite the rotational connecting part.

9. The foldable keyboard according to claim 8, wherein a total longitudinal length of the first keyboard unit with the addition of the control part is equal to a longitudinal length of the second keyboard unit.

10. The foldable keyboard according to claim 8, wherein the control part is provided with a connector part connected to an electronic device and a backrest member for holding the electronic device close to the connector part.

11. The foldable keyboard according to claim 10, wherein the backrest member is made of a wire member rotatably supported on the control part, and
the wire member is put in a clearance existing between adjacent key switch rows in the first and second keyboard units in a superposed state during nonuse of the keyboard.

12. The foldable keyboard according to claim 8, further comprising :
a first connecting part provided in the control part; and
a jointed-arm moveably attached to the first keyboard unit, the jointed-arm being provided with a second connecting part connected to the first connecting part to control the keyboard through the control part.

13. The foldable keyboard according to claim 12, wherein the jointed-arm is constructed that one end of a first arm member is pivotally connected to the arm connecting part in the first keyboard unit with a first connecting pin and the other end of the first arm member is pivotally connected to one end of a second arm member provided with the second connecting part with a second connecting pin, and
either or both of the first and second connecting pins are provided at a predetermined slant angle with respect to a perpendicular line so that a bottom surface of the control part becomes flush with a bottom surface of the keyboard when the control part is placed close to a back side of the keyboard.

14. A foldable keyboard in which a rotational connecting part is provided between a first keyboard unit in which a plurality of key switches to be operated for a left hand are arranged and a second keyboard unit in which a plurality of key switches to be operated for a right hand are arranged so that both units are rotated about the rotational connecting part in a direction to come apart from each other into a horizontally arranged state during use of the keyboard and both units are rotated about the rotational connecting part in a direction to come close to each other into a superposed state during nonuse of the keyboard, the keyboard comprising:
a control part for controlling the keyboard, the control part being placed alongside a side edge of the first keyboard unit opposite the rotational connecting part; and
a backrest member which is rotatably supported on the control part to hold an electronic device and is made of a wire member;
wherein the wire member is put in a clearance existing between adjacent key switch rows in the first and second keyboard units facing each other in a superposed state during nonuse of the keyboard.

15. The foldable keyboard according to claim 14 further comprising:
a first connecting part provided in the control part; and
a jointed-arm moveably attached to the first keyboard unit, the jointed-arm being provided with a second connecting part connected to the first connecting part to control the keyboard through the control part.

16. The foldable keyboard according to claim 15, wherein the jointed-arm is constructed that one end of a first arm member is pivotally connected to the arm connecting part in the first keyboard unit with a first connecting pin and the other end of the first arm member is pivotally connected to one end of a second arm member provided with the second connecting part with a second connecting pin, and
either or both of the first and second connecting pins are provided at a predetermined slant angle with respect to a perpendicular line so that a bottom surface of the control part becomes flush with a bottom surface of the keyboard when the control part is placed close to a back side of the keyboard.

17. The foldable keyboard according to claim 14, wherein the first keyboard unit has a longitudinal length shorter than a longitudinal length of the second keyboard unit, and
in a state where the control part is placed alongside a side edge of the first keyboard unit, a total length of the first keyboard unit with the addition of the control part is equal to a longitudinal length of the second keyboard unit.

18. A foldable keyboard in which a rotational connecting part is provided between a first keyboard unit in which a plurality of key switches to be operated for a left hand are arranged and a second keyboard unit in which a plurality of key switches to be operated for a right hand are arranged so that both units are rotated about the rotational connecting part in a direction to come apart from each other into a horizontally arranged state during use of the keyboard and both units are rotated about the rotational connecting part in a direction to come close to each other into a superposed state during nonuse of the keyboard, the keyboard comprising:
a control part for controlling the keyboard, the control part being detachably placed alongside a side edge of the first keyboard unit opposite the rotational connecting part;
a first connecting part provided in the control part; and
a jointed-arm moveably attached to the first keyboard unit, the jointed-arm being provided with a second connecting part connected to the first connecting part to control the keyboard through the control part;
wherein the jointed-arm is constructed that one end of a first arm member is pivotally connected to the arm connecting part in the first keyboard unit with a first connecting pin and the other end of the first arm member is pivotally connected to one end of a second arm member provided with the second connecting part with a second connecting pin, and
either or both of the first and second connecting pins are provided at a predetermined slant angle with respect to a perpendicular line so that a bottom surface of the control part becomes flush with a bottom surface of the keyboard when the control part is placed close to a back side of the keyboard.

19. The foldable keyboard according to claim 18, wherein the control part is provided with a connector part to be connected to an electronic device and a backrest member for holding the electronic device close to the connector part.

20. The foldable keyboard according to claim 19, wherein the backrest member is made of a wire member rotatably supported on the control part, and
the wire member is put in a clearance existing between adjacent key switch rows in the first and second keyboard units facing each other in a superposed state during nonuse of the keyboard.

21. The foldable keyboard according to claim 18, wherein the first keyboard unit has a longitudinal length shorter than a longitudinal length of the second keyboard unit, and
in a state where the control part is placed alongside a side edge of the first keyboard unit, a total length of the first keyboard unit with the addition of the control part is equal to a longitudinal length of the second keyboard unit.

22. The foldable keyboard according to claim 18, wherein the first connecting pin is formed at a back side edge of the first keyboard unit so that during nonuse the jointed-arm is put along the back side edge and the control part is placed alongside the side edge of the first keyboard unit.

23. A foldable keyboard in which a rotational connecting part is provided between a first keyboard unit and a second keyboard unit so that both units are rotated about the rotational connecting part in a direction to come apart from each other into a horizontally arranged state during use of the keyboard and both units are rotated about the rotational connecting part in a direction to come close to each other into a superposed state during nonuse of the keyboard,
wherein a plurality of key switches to be operated by a left hand are arranged in the first keyboard unit and a plurality of key switches to be operated by a right hand are arranged in the second keyboard,
a control part for controlling the keyboard is detachably placed alongside a side edge of the first keyboard unit.

24. The foldable keyboard according to claim 23, wherein the control part is provided with a connector part to be connected to an electronic device and a backrest member for holding the electronic device close to the connector part.

25. The foldable keyboard according to claim 24, wherein the backrest member is made of a wire member rotatably supported on the control part, and
the wire member is put in a clearance existing between adjacent key switch rows in the first and second keyboard units facing each other in a superposed state during nonuse of the keyboard.

26. The foldable keyboard according to claim 23, further comprising:
a first connecting part provided in the control part; and
a jointed-arm moveably attached to the first keyboard unit, the jointed-arm being provided with a second connecting part connected to the first connecting part to control the keyboard through the control part.

27. The foldable keyboard according to claim 26, wherein the jointed-arm is constructed that one end of a first arm member is pivotally connected to the arm connecting part in the first keyboard unit with a first connecting pin and the other end of the first arm member is pivotally connected to one end of a second arm member provided with the second connecting part with a second connecting pin, and
either or both of the first and second connecting pins are provided at a predetermined slant angle with respect to a perpendicular line so that a bottom surface of the control part becomes flush with a bottom surface of the keyboard when the control part is placed close to a back side of the keyboard.

28. The foldable keyboard according to claim 23, wherein the first keyboard unit has a longitudinal length shorter than a longitudinal length of the second keyboard unit, and
in a state where the control part is placed alongside a side edge of the first keyboard unit, a total longitudinal length of the first keyboard unit with the addition of the control part is equal to a longitudinal length of the second keyboard unit.
